# EUROPÄISCHE PATENTSCHRIFT

(11) **EP 4 323 494 B1**
(45) Veröffentlichungstag und Bekanntmachung des Hinweises auf die Patenterteilung: **17.12.2025**
(21) Anmeldenummer: 22717714.4
(22) Anmeldetag: 14.04.2022
(51) Int. Cl.: C12C 13/02, C12C 13/08, C12C 7/06, C12C 7/17

(54) **SUDWERKTROMMEL**
CONTAINER FOR BREWERIES
CUVE POUR BRASSERIES

(30) Priorität: 15.04.2021 CH 3952021; 26.11.2021 CH 0706072021
(43) Veröffentlichungstag der Anmeldung: 21.02.2024
(73) Patentinhaber: MICHEL, Adrian, 4056 Basel (CH)
(72) Erfinder: MICHEL, Adrian, 4056 Basel (CH)
(74) Vertreter: Bohest AG
(86) Internationale Anmeldenummer: PCT/CH2022/050009
(87) Internationale Veröffentlichungsnummer: WO 2022/217369

(56) Entgegenhaltungen:
- DE-A1- 10 156 829
- DE-C- 826 742
- DE-U1- 29 713 506
- FR-A1- 2 440 771

## Beschreibung

Die vorliegende Erfindung betrifft einen Mischer mit rotierendem Mischbehälter und seine Verwendung in der Bierbrauerei oder der Eisextraktion von Pflanzen und Pflanzenteilen wie Trichome.

### Stand der Technik

Die Bierherstellung besteht im Wesentlichen aus den Arbeitsschritten Mälzen (Keimung der Gerste, zur Aktivierung von Enzymen, die Stärke hydrolysieren), Darre (Rösten der gekeimten Gerste zu Malz, u.a. zur Bildung von Aromastoffen), Schroten des Malzes auf eine gewünschte Schrotgrösse, Maischen (Erhitzen des gerösteten Malzes in wässeriger Suspension, zur Hydrolyse von Stärke zu fermentierbarem Zucker, wodurch die Würze erhalten wird), Abläutern (Trennen der Würze von dem Malz), Würzekochung (zusammen mit Hopfen, damit die Bitterstoffe hinzukommen), Ausschlagen (Abtrennen des Hopfens und der beim Kochen ausgefallenen Eiweisse von der Würze) und Fermentierung. Das Maischen ist derjenige Arbeitsschritt, der den Anteil an fermentierbarem Zucker und damit den maximal möglichen Alkoholgehalt des fertigen Bieres bestimmt. Während dem Maischen ist also eine möglichst innige Durchmischung des Malzes mit der wässerigen Phase erwünscht, um möglichst viel Zucker zu extrahieren, was aber eine intensivere Durchmischung erfordert. Andererseits ist es unerwünscht, dass das Malz während des Maischens zerrieben wird, weil durch solchen feinteiligen Abrieb das Abläutern erschwert wird. Das erfordert eine schonendere Durchmischung.

Je nach der Grösse der Brauerei werden diese Arbeitsschritte in separaten Behältern (Gefässen) durchgeführt. Die grössten Brauereinen sind als Vier-Gefässe-Sudwerke ausgebildet, mit einem Maischbottich, einer Maischpfanne, einem Läuterbottich und einer Würzepfanne, die oft übereinander angeordnet werden, um das pumpenlose Ablassen der Flüssigkeiten von einem zum nächsten Gefäss zu ermöglichen. Das Vorhandensein von vier getrennten Gefässen für jeden einzelnen der vier Arbeitsschritte ermöglicht zwar das gleichzeitige Durchführen aller vier Schritte an verschiedenen Brauansätzen gleichzeitig, erfordert aber den höchsten Platzbedarf und konstruktiven Aufwand.

Kompakter sind Drei-Gefässe-Sudwerke, bei denen typischerweise ein- und dasselbe Gefäss als Maischepfanne und Würzepfanne dient und die beiden anderen Gefässe die Funktionen des Maischbottichs und des Läuterbottichs übernehmen. Noch kompakter sind Zwei-Gefäss-Sudwerke, bei denen typischerweise einerseits ein Gefäss gleichzeitig als als Maischepfanne und Würzepfanne dient und ein zweites Gefäss typischerweise als Maisch- und Läuterbottich dient. Die kompakteste Konstruktion, aber typischerweise auch mit der kleinsten Kapazität etwa für den Hobbybrauer, ist ein Ein-Gefäss-Sudwerk, bei dem ein einziges Gefäss alle vier Funktionen übernimmt.

Tendenziell nimmt also die Braukapazität mit der Zahl der gleichzeitig nebeneinander in unterschiedlicher Funktion betriebenen Gefässe zu, andererseits steigt mit zunehmender Zahl der Gefässe der Platzbedarf.

Beim Mälzen ist Ultraschall schon verwendet worden, siehe U.S. 2,745,789 A. Die Funktion des Ultraschalls war die Beschleunigung der Wasseraufnahme der Gerste und deren Keimung.

DE 101 56 829 A1 und CN 201395585Y beschreiben die Verwendung von Ultraschall beim Maischen, wobei übliche fest montierte Maischepfannen verwendet werden; CN 201395585Y verwendet zusätzlich einen im Boden der Maischepfanne angebrachten Propellerrührer.

Bei der Würzekochung mit Hopfen ist ebenfalls schon Ultraschall verwendet worden, siehe US 2,816,031 A. Dort soll der Einsatz von Ultraschall die kolloidale Dispersion der Harze des Hopfens und damit eine bessere Extraktion der Bitterstoffe ermöglichen. DE 297 13 506 U1 beschreibt eine Würzekochung oder ein Maischen unter Verwendung von Ultraschallwandlern.

GB 18237 (1913) beschreibt in Fig. 1 und 2 ein Abläuterungsverfahren, bei dem die Würze von der Maische mittels einer perforierten Drehtrommel abgetrennt wird. DE-PS-826 742 beschreibt ebenfalls ein Abläuterungsverfahren unter Verwendung eines "Drehfilters", der Maische in Treber und Würze trennt. FR-A-2 440 771 A1 offenbart einen Drehmischer mit einem Lager, das in Fig. 1 links gezeigt ist. Am rechten Ende liegt der Drehmischer auf einer Rolle 6 auf.

Die Verwendung der hydrodynamischen Kavitation beim Maischen ist ebenfalls vorbekannt. Journal of Cleaner Production, 142(4), pp. 1457-1470 (2017) z.B. beschreibt die Verwendung eines Schlaufenreaktors, bei dem in der Schlaufe eine Venturi-Düse vorhanden ist, beim Maischen. Die Venturi-Düse erzeugt die hydrodynamische Kavitation, die die Extraktion von Stärke und Zucker aus dem Malz verbessern soll. Es erweist sich aber als schwierig, dieses Verfahren in grösseren Volumen anzuwenden. Zudem wird das Korn sehr stark beschädigt was zu weiteren Nachteilen beim Abläutern verursacht.

Bei vielen Extraktionsverfahren und auch beim Maischen kann die Anwesenheit von Sauerstoff stören, weil er die zu extrahierenden Substanzen oder, speziell beim Maischen, die beteiligten Enzyme, Geschmacksstoffe und/oder die für den Geschmack und die Stabilität des Bieres wichtige Ascorbinsäure schädigen kann. Beim Erhitzen sinkt zwar die Löslichkeit des Sauerstoffs im Extraktionsmedium, bei typischen Maischtemperaturen auf etwa 4-5 ppm, aber die Reaktivität dieses Restsauerstoffs erhöht sich gleichzeitig mit steigender Temperatur. Die typischerweise angestrebte Restkonzentration an Sauerstoff beim Maischen ist daher 0,5 ppm oder weniger. Üblichweise wird eine Entfernung des Sauerstoffs durch Entgasen des Extraktionsmediums und/oder durch Beaufschlagen mit einem Schutzgas (Stickstoff, Kohlendioxid) durchgeführt.

Aufgabe der vorliegenden Erfindung ist es, einen Mischer bereitzustellen, der insbesondere in der Bierherstellung einsetzbar ist und die oben erwähnten Probleme beim Durchmischen berücksichtigt und eine einfachere Prozessführung bei gleichzeitig hohem Durchsatz ermöglicht.

### Zusammenfassung der Erfindung

Die Aufgabe wird erfindungsgemäss durch einen Mischer wie in Anspruch 1 definiert gelöst.

Bevorzugte Aspekte des Mischers und seiner Anwendung ergeben sich aus den abhängigen Ansprüchen und der folgenden Beschreibung.

### Genaue Beschreibung der Erfindung

Der erfindungsgemässe Mischer erzeugt durch den Ultraschall eine akustische Kavitation. Verwendung von Ultraschall an sich war beim Maischen zwar vorbekannt (siehe oben), aber nach Kenntnis des Anmelders sind bisher keine erfolgreichen solchen Prozesse im grösseren Volumen durchgeführt worden. Mit der vorliegenden Erfindung wird das möglich und die besagte Beschädigung des Korns und die damit verbundenen Probleme beim Abläutern werden verringert. Der erfindungsgemässe Mischer gewährleistet eine gleichmässige Beschallung mit Ultraschall als die entsprechenden vorbekannten Mischer.

Der Mischbehälter umfasst ein Innenvolumen, das das zu mischende Mischgut aufnimmt. Als "Innenvolumen" des Mischbehälters wird das gesamte von der Innenfläche des Mischbehälters umschlossene Volumen einschliesslich aller inwändig vorhandenen Elemente, wie etwa eine Welle oder Achse, allenfalls zusätzlich vorhandener Mischwerkzeuge (siehe unten) und Streben (siehe unten) verstanden.

Der Mischbehälter weist vorzugsweise eine oder mehrere Öffnungen auf, die je durch einen zugehörigen Verschluss flüssigkeits- und/oder gasdicht verschlossen werden kann. Als "flüssigkeitsdicht" wird bevorzugt verstanden, dass die mit ihrem zugehörigen Verschluss verschlossene Öffnung bis zu dem im Inneren des Mischbehälters bei seinem Betrieb auftretenden maximalen Überdruck gegenüber der Umgebung und bei Raumtemperatur (ca. 23°C) wasserdicht ist. Als "gasdicht" wird bevorzugt verstanden, dass die mit ihrem zugehörigen Verschluss verschlossene Öffnung bis zu dem im Inneren des Mischbehälters bei seinem Betrieb auftretenden maximalen Überdruck gegenüber der Umgebung und bei Raumtemperatur (ca. 23°C) luftdicht ist.

Grösse und Form des Innenvolumens werden durch den Mischbehälter definiert, wenn die eine oder mehrere Öffnungen durch ihre Verschlüsse verschlossen ist oder sind; diese Definitionen bleiben aber erhalten und sind anwendbar, auch wenn die Verschlüsse offen oder gar entfernt sind: Die Volumenbegrenzungen, die in verschlossenem Zustand physisch durch den oder die Verschlüsse beigetragen werden, bleiben als gedachte Begrenzungen nach dem Öffnen und allenfalls Entfernen des oder der Verschlüsse identisch bestehen.

Die Bestimmung des Innenvolumens des Mischbehälters kann für die Zwecke der Erfindung beispielsweise erfolgen, indem zunächst sämtliche Öffnungen des Mischbehälters bis auf eine ("sämtliche Öffnungen" bedeutet alle Öffnungen, die mittels Verschluss verschliessbar sind und die Öffnungen der beiden Lager) verschlossen werden; wobei Öffnungen, die mittels eines Verschlusses flüssigkeitsdicht verschlossen werden können, mit diesem Verschluss verschlossen werden, und Öffnungen der Lager mittels eines Stopfens verschlossen werden; Ausrichten des Mischbehälters dergestalt, dass die eine nicht verschlossene Öffnung nach oben zeigt; vollständiges Auffüllen des Mischbehälters über die eine offene Öffnung mit einer Flüssigkeit mit bekannter Dichte; Verschliessen der einen offenen Öffnung mittels ihres flüssigkeitsdicht schliessenden Verschlusses, oder, wenn die eine offene Öffnung diejenige eines der beiden Lager war mit einem Stopfen, dergestalt, dass ein Überschuss Flüssigkeit während des Verschliessens aus der Öffnung verdrängt wird, wodurch ein gasfrei und vollständig flüssigkeitsgefüllter Mischbehälter erhalten wird; Wägen des Bruttogewichts dieses flüssigkeitsgefüllten verschlossenen Mischbehälters; vollständiges Entleeren der Flüssigkeit aus dem Mischbehälter; Zurückwiegen des Tara-Gewichts des leeren Behälters und der flüssigkeitsdichtenden Verschlüsse und der beiden Stopfen, und Ausrechnen des Innenvolumens als die Differenz zwischen Brutto- und Tara-Gewicht, geteilt durch die Dichte der Flüssigkeit.

Das dergestalt bestimmbare Innenvolumen des Mischbehälters richtet sich nach dem jeweiligen Einsatzgebiet des erfindungsgemässen Mischers. In einer bevorzugten Ausführungsform, insbesondere wenn der erfindungsgemässe Mischer in der Bierbrauerei verwendet wird, liegt dieses so bestimmte Innenvolumen bevorzugt im Bereich von 1 Liter bis 30 Kubikmetern. Eher bevorzugt liegt dieses Innenvolumen dann im Bereich von 1 bis 500 Litern oder im Bereich von 5 bis 20 Kubikmetern.

Als "Mischgut", mit dem der erfindungsgemässe Mischer befüllt werden kann, wird im Rahmen der vorliegenden Anmeldung eine Mischung verstanden, die einen Anteil Flüssigkeit oder Gas und einen Anteil partikulärer Feststoff umfasst. Der Flüssigkeit oder dem Gas kann die Funktion eines Extraktionsmediums für den partikulären Feststoff zukommen. Als Flüssigkeit kommen insbesondere Wasser, wässerige Lösungen oder Mischungen von Wasser und einem mit Wasser in jedem Verhältnis mischbaren Lösungsmittel, etwa C₁-C₃-Alkohole, Aceton, Öle, Tetrahydrofuran oder überkritische Gase wie überkritisches CO₂, überkritisches Ethan oder überkritisches Propan, in Betracht. Als Gase kommen etwa unterkritisches CO₂ oder Ammoniak in Betracht. Die bevorzugte Flüssigkeit ist Wasser. Als partikulärer Feststoff kommen insbesondere gemahlene, zerstossene oder geschrotete Biomassen, insbesondere Getreide, Samen, Körner, ganze Pflanzen, Pflanzenteilen wie Trichome, Beeren, Früchte, Blüten, oder Holzspäne in Betracht; wobei der partikuläre Feststoff neben dem besagten Mahlen, Zerstossen oder Schroten noch weiteren Vorbehandlungen, etwa thermischen Vorbehandlungen zur Trocknung und/oder Röstung, unterzogen worden sein kann. Die Partikelgrösse des partikulären Feststoffs ist bevorzugt dergestalt, dass er durch Sieb Nr. 1 hindurchtritt und von Sieb Nr. 5 herausgesiebt wird, wenn die Siebe des Pfungstädter Plansifters verwendet werden. Das Gewichtsverhältnis zwischen Flüssigkeit und partikulärem Feststoff in einem solchen Mischgut ist bevorzugt im Bereich von 10:1 bis 1:2.

Ein bevorzugtes Beispiel für ein Mischgut, mit dem der Mischbehälter des erfindungsgemässen Mischers befüllbar ist, umfasst Gerstenmalz und Wasser, und ist vorzugsweise für das Maischen in der Bierbrauerei geeignet.

Die Befüllung des Mischbehälters mit dem Mischgut ist vorzugsweise so, dass das Innenvolumen des Mischbehälters zu mindestens 95%, eher bevorzugt zu mindestens 99%, befüllt ist.

Der Begriff "etwa", wenn zusammen mit einem Zahlenwert verwendet, bedeutet im Rahmen der vorliegenden Anmeldung vorzugsweise, dass ±10% Abweichung von diesem Zahlenwert erlaubt oder möglich sind. Insbesondere bedeutet "etwa", wenn im Zusammenhang mit einer Bereichsuntergrenze verwendet, vorzugsweise, dass diese Bereichsuntergrenze bis um 10% unterschritten werden kann, und wenn im Zusammenhang mit einer Bereichsobergrenze verwendet, vorzugsweise, das diese Bereichsobergrenze bis um 10% überschritten werden kann.

Der Mischbehälter im erfindungsgemässen Mischer ist vorzugsweise aus einem für Lebensmittelanwendung zugelassenen Edelstahl, beispielsweise AISI 316 (Werkstoffnummer 1.4404) oder AISI 304 oder AISI 304 L (Werkstoffnummern 1.4301, 1.4306 oder 1.4307), aus Kupfer, oder aus mit Kupfer beschichtetem Stahl hergestellt. Sofern der erfindungsgemässe Mischer eine Heizung umfasst (siehe unten) ist Kupfer oder mit Kupfer beschichteter Stahl im Hinblick auf optimierte Wärmeleitung bevorzugt.

Der erfindungsgemässe Mischer funktioniert hinsichtlich der mechanischen, schonenden Durchmischung von Malz und Flüssigkeit aufgrund seines rotierenden Mischbehälters grösstenteils oder sogar ausschliesslich als Freifallmischer. Es würde überraschenderweise gefunden, dass bei den für eine Maische üblichen Mischungsverhältnissen von Malz zu Wasser, also in Bereich von 1 zu 2,5 bis 1 zu 5 Gewichtsteilen, die mechanische schonende Mischung nach dem Prinzip des Freifallmischers im Hinblick auf maximale Zuckerextraktion mit minimaler Schädigung am Mischgut/Korn zufriedenstellend funktioniert, und zwar bei allen für die Bierherstellung üblichen Schrot-Korngrössen.

Aufgrund der hauptsächlichen oder ausschliesslichen Wirkungsweise als Freifallmischer weicht die Rotationsachse des Mischbehälters vorzugsweise um nicht mehr als 20° von der Horizontalen ab. Eher bevorzugt weicht die Rotationsachse um nicht mehr als 10°, noch eher bevorzugt um nicht mehr als 5° von der Horizontalen ab. Insbesondere bevorzugt ist die Rotationsachse genau horizontal.

Als Rotationsachse für den zur Rotation befähigten Mischbehälter in all seinen Ausführungsformen eignet sich beispielsweise diejenige Hauptträgheitsachse des Mischbehälters mit dem geringsten Hauptträgheitsmoment.

Zur Ermöglichung der Rotation des Mischbehälters ist dieser an den beiden Durchstosspunkten der Rotationsachse durch den Mischbehälter drehbar gelagert oder liegt auf Laufrollen bzw. Zahnrad mit Führungsschiene.

Der Mischbehälter wird in einer ersten Ausführungsform zur Befähigung der Rotation, die nicht Teil der Erfindung ist, über zwei an dem Mischbehälter angebrachte zylindrische Zapfen, deren Mittelachse auf der Rotationsachse liegen, und die auf oder in ausserhalb des Mischbehälters angeordneten Lagern drehbar gelagert sind, zur Rotation befähigt. Diese Ausführungsform ist insbesondere bevorzugt, wenn der Mischbehälter als Druckbehälter ausgebildet werden soll.

In einer zweiten Ausführungsform zur Befähigung der Rotation, die nicht Teil der Erfindung ist, wird der Mischbehälter mittels einer entlang der Rotationsachse verlaufenden Achse oder Welle, die mit dem Mischbehälter fest verbunden ist, zur Rotation befähigt. Diese fest verbundene Achse oder Welle weist typischerweise zwei Fortsätze ähnlich den obenstehend erwähnten Zapfen auf, die wiederum auf zwei Lagern ausserhalb des Mischbehälters gelagert sind.

Zur Befähigung der Rotation wird der Mischbehälter erfindungsgemäss mittels einer gegenüber dem Mischbehälter frei drehbaren, insbesondere starren Achse, die entlang der Rotationsachse des Mischbehälters verläuft, zur Rotation befähigt. In dem Fall weist der Mischbehälter selber zwei Lager auf, mittels derer der Mischbehälter gegenüber der starren Achse frei drehbar ist. Die Achse ist dann ausserhalb des Mischbehälters abgestützt. Diese Achse verläuft durch den gesamten Mischbehälter hindurch . Andererseits liegt sie in Form von zwei gegenüber dem Mischbehälter frei drehbaren, insbesondere starren Achsabschnitten vor, die entlang der Rotationsachse des Mischbehälters, aber nicht entlang der gesamten Länge des Mischbehälter verlaufen. Diese Achsabschnitte ragen je in eines der beiden Lager des Mischbehälters hinein und der Mischbehälter wäre drehbar auf diesen beiden Achsabschnitten gelagert.

In dem nicht erfindungsgemässen Fall, wo eine fest mit dem Mischbehälter verbundene, durch den gesamten Mischbehälter verlaufende Achse oder Welle vorhanden ist, können von dieser Achse oder Welle radial Streben abgehen, die bis zur Innenfläche des Mischbehälters verlaufen und an dieser befestigt sind und so für eine zusätzliche Steifigkeit des Mischbehälters und für eine zusätzliche mechanische Rührwirkung sorgen.

Der Mischbehälter ist vorzugsweise von aussen gesehen rotationssymmetrisch um eine Symmetrieachse ausgebildet; eher bevorzugt weist er eine zylinderförmige Mantelfläche und eine erste und eine zweite Stirnseite auf, die eher bevorzugt ebenfalls rotationssymmetrisch um dieselbe Symmetrieachse ausgebildet sind, eher bevorzugt sind beide Stirnseiten plan oder haben eine konvexe Krümmung, d.h. sie haben dann die Form einer Kugelkalotte oder einer aus einem Rotationsellipsoid herausgeschnitten Kalotte. Im Hinblick auf eine Reinigung des Mischbehälters kann vorzugsweise mindestens eine dieser beiden Stirnseiten abnehmbar sein, etwa, indem sie mit dem Mischbehälter flüssigkeits- und (wenn das Mischgut ein Gas umfasst) gasdicht verschraubbar ist.

Im Falle des von aussen gesehen rotationssymmetrischen Mischbehälters oder Mischbehälters mit zylindrischer Mantelfläche kann in einer ersten bevorzugten Symmetrievariante die Symmetrieachse erstens mit der Rotationsachse zusammenfallen, weil die Symmetrieachse dann in der Regel gerade diejenige Hauptträgheitsachse mit dem geringsten Trägheitsmoment ist. Die beiden Durchstosspunkte der Rotationsachse durch den Mischbehälter sind dann im Zentrum der dann ebenfalls vorzugsweise vorhandenen Stirnseiten.

In einer zweiten bevorzugten Symmetrievariante kann im Falle des von aussen gesehen rotationssymmetrischen Mischbehälters oder Mischbehälters mit zylindrischer Mantelfläche die Symmetrieachse gegenüber der Rotationsachse geneigt sein, so dass die Rotation gleichzeitig eine Taumelkomponente erhält. In diesem Fall sind die beiden Durchstosspunkte der Rotationsachse nicht genau im Zentrum der beiden dann ebenfalls vorzugsweise vorhandenen Stirnseiten sondern etwas exzentrisch davon, und zwar auf der einen Stirnseite in die eine Richtung von ihrem Zentrum hinweg um eine bestimmte Distanz versetzt und auf der anderen Stirnseite in die entgegengesetzte Richtung von deren Zentrum hinweg versetzt, vorzugsweise um die gleiche Distanz. In einem solchen Mischer mit Taumelkomponente liegt der Schnittpunkt zwischen Symmetrieachse und Rotationsachse bevorzugt auf der Symmetrieachse etwa auf halber Distanz zwischen den beiden Durchstosspunkten der Symmetrieachse mit der Innenfläche des Mischbehälters.

In einer dritten bevorzugten Symmetrievariante kann im Falle des von aussen gesehen rotationssymmetrischen Mischbehälters oder Mischbehälters mit zylindrischer Mantelfläche die Rotationsachse zwar parallel zur Symmetrieachse verlaufen, aber um eine bestimmte Distanz gegenüber dieser versetzt sein. In diesem Fall sind die beiden Durchstosspunkte der Rotationsachse wiederum nicht genau im Zentrum der beiden dann ebenfalls vorzugsweise vorhandenen Stirnseiten sondern ebenfalls etwas exzentrisch davon, aber auf beiden Stirnseiten in die gleiche Richtung vom Zentrum hinweg versetzt und vorzugsweise um dieselbe Distanz, um die Parallelität zwischen Symmetrie- und Rotationsachse zu gewährleisten.

Der Mischbehälter kann in einer Ausführungsform des Antriebs, die nicht Teil der Erfindung ist, durch ein über seine Rotationsachse einwirkendes Drehmoment in Rotation versetzt werden. Hierzu weist der Mischbehälter entweder zwei Zapfen (gemäss obiger erster Ausführungsform der Befähigung zur Rotation) oder eine fest mit dem Mischbehälter verbundene Welle (gemäss obiger zweiter Ausführungsform der Befähigung zur Rotation) auf. Diese Form der Drehmomentübertragung ist bei allen Mischbehältern möglich und bei unsymmetrischen Mischbehältern bevorzugt. Die Übertragung von Drehmoment mittels der Welle ist insbesondere im Falle eines von aussen gesehenen rotationssymmetrischen Mischers oder Mischers mit zylinderförmiger Mantelfläche bevorzugt, wenn bei diesem die Symmetrieachse gegenüber der Rotationsachse geneigt oder gegenüber dieser parallel versetzt ist (siehe oben).

In der erfindungsgemässen Ausführungsform des Antriebs wird der Mischbehälter durch ein direkt auf die Aussenfläche des Mischbehälters einwirkendes Drehmoment in Rotation versetzt. In dieser Ausführungsform kann das Drehmoment von einem Antriebsmotor in einer ersten Variante der Drehmomentübertragung von aussen mittels Rollen, Walzen auf die Aussenfläche des Mischbehälters übertragen werden. Hierzu können die Rollflächen dieser Rollen oder Walzen bevorzugt mit einem Material beschichtet sein, das einen hohen statischen Haftreibungskoeffizienten mit der Aussenfläche des Mischbehälters aufweist, etwa eine Gummischicht. Sofern der Mischbehälter beheizbar ist (siehe unten) ist diese Gummischicht dann vorzugsweise aus einem hitzebeständigen Silikonkautschuk. Ebenfalls bevorzugt verlaufen in dieser ersten Variante der Drehmomentübertragung von aussen diese Rollen oder Walzen an der Unterseite des Mischbehälters und entlang der gesamten Länge des Mischbehälters; in diesem Fall hat der Mischbehälter eine zylindrische Aussenform. Wenn die Rollen oder Walzen an der Unterseite und entlang der gesamten Länge des zylindrischen Mischbehälters verlaufen, wird nicht nur eine Übertragung des Drehmomentes, sondern auch eine zusätzliche Abstützung des Mischbehälters bewirkt. In einer zweiten Variante der Drehmomentübertragung von aussen wird ein Transmissionsriemen vorgesehen, der auf die Aussenfläche des Mischbehälters einwirkt. In einer dritten Variante der Drehmomentübertragung von aussen kann die Aussenfläche des Mischbehälters einen ringförmigen Zahnkranz aufweisen, der in ein an dem Antriebsmotor angebrachtes Zahnrad eingreift und so für die Übertragung des Drehmoments vom Antriebsmotor auf den Mischbehälter sorgt. In dieser dritten Drehmomentübertragungsvariante ist die Aussenfläche des Mischbehälters mindestens an derjenigen Stelle, wo der Zahnkranz angebracht ist, rotationssymmetrisch.

In allen Ausführungsformen des erfindungsgemässen Mischers, der eine zylindrische Mantelfläche aufweist, können, wie bei der obigen ersten Variante der Drehmomentübertragung von aussen beschrieben, entlang der gesamten Länge der Mantelfläche und an deren Unterseite Walzen vorgesehen sein, die keine Drehmomentübertragung bewirken, sondern nur an der Aussenfläche des Mischbehälters aufliegen und passiv mitrotieren und dabei den Mischbehälter von unten abstützen.

In allen Ausführungsformen des Antriebs und allen Varianten der Drehmomentübertragung kann ein Getriebe zwischengeschaltet sein, dass die anfängliche (in der Regel vermutlich zu hohe) Drehzahl des Antriebsmotors heruntersetzt.

Antriebsmotor und Drehmomentübertragung auf den Mischbehälter sind vorzugsweise dergestalt ausgelegt, dass der Mischbehälter in mit Mischgut befülltem Zustand zu einer Rotation im Bereich von 1 bis 15 U/min befähigt ist.

In einer ersten bevorzugten Ausführungsform der Durchmischung wird die mechanische Durchmischung bewirkt, indem das Mischgut ausschliesslich durch Reibung an der Innenwand des Mischbehälters hochgenommen wird und anschliessend aufgrund der eigenen Schwerkraft frei durch den Mischerraum fällt. In dieser ersten bevorzugten Ausführungsform sind an der Innenfläche des Mischbehälters keine zusätzlichen Mischwerkzeuge wie Schaufeln, Noppen oder Wellen angebracht; die Innenfläche des Mischbehälters ist also glatt ausgebildet.

In einer zweiten bevorzugen Ausführungsform der Durchmischung weist die Innenfläche des Mischbehälters Unebenheiten auf, die das Hochnehmen eines darin enthaltenen Mischgutes unterstützen. Diese Unebenheiten können in Form einer Profilierung der Innenfläche vorliegen, etwa in Form von Noppen oder Schwellen. Wenn es sich um Schwellen handelt, können diese entweder in etwa parallel zur Drehrichtung des Mischbehälters verlaufen, oder sie können rechts- oder linksdrehend spiralförmig entlang der Innenfläche des Mischbehälters verlaufen. In letzterem Fall können rechts- und linksdrehende Schwellen zu gleichen Anteilen und in ansonsten gleicher Ausbildungsform kombiniert werden. Diese Schwellen können entlang der gesamten Innenfläche des Mischbehälters verlaufen oder sie können als Segmente ausgebildet sein, die sich jeweils nur entlang einen Teil der Innenfläche erstrecken. Die Unebenheiten können auch als eigentliche Mischwerkzeuge, etwa in Form von Schaufeln, Umlenkblechen oder Rührstäben, ausgebildet sein.

Der erfindungsgemäss Mischer weist mindestens eine Ultraschallquelle auf, die zum Beschallen mindestens eines Teils des Innenvolumens des Mischbehälters, vorzugsweise zum Beschallen seines gesamten Innenvolumens, befähigt ist. Wenn das Mischgut eine Flüssigkeit umfasst, ist dieser beschallte Teil des Innenvolumens vorzugsweise derjenige Teil, der mit Mischgut befüllt ist und/oder mit Mischgut in Kontakt kommt. Die mindestens eine Ultraschallquelle ist im Inneren des Mischbehälters angeordnet. Die eine oder mehrere Ultraschallquellen sind einerseits eine oder mehrere Ultraschallschwingplatten, die im Inneren des Mischbehälters angebracht sind. Solche Tauchschwinger in Form von Schwingplatten sind an sich vorbekannt. Es handelt sich um Platten aus einem gut Ultraschall leitendenden Material, insbesondere Metall, bevorzugt einem für Lebensmittelanwendung zugelassenen nichtrostenden Stahl wie oben exemplifiziert, auf denen in einem zweidimensionalem Raster, vorzugsweisen einem quadratischen Raster, elektromechanische oder piezoelektrische Konverter angebracht sind, die den Ultraschall in Phase erzeugen und ihn auf die Schwingplatte übertragen. Die Ultraschallschwingplatte wirkt als Ultraschallresonator und hat daher eine Resonanzfrequenz, die der Frequenz des von den Konvertern erzeugten Ultraschalls entspricht, und vorzugsweise eine Dicke, die der halben Wellenlänge des zu erzeugenden Ultraschalls entspricht. Diese im Inneren angebrachten Ultraschallschwingplatten können vorzugsweise einerseits senkrecht auf der Rotationsachse des Mischbehälters stehen, so dass ihre Flächennormale parallel zur Rotationsachse des Mischbehälters verläuft. In dem Fall sind sie rund (insbesondere kreisförmig) oder eckig (insbesondere quadratisch) ausgebildet sein. Sie sind in dem Fall entweder an der Innenseite des Mischbehälters oder an einer mit befestigt, wodurch sie mit dem Mischbehälter mitrotieren können, oder sie sind an einer im Inneren des Mischbehälters verlaufenden, fest mit dem Mischbehälter verbundenen Welle (gemäss obiger zweiter Ausführungsform zur Befähigung der Rotation) befestigt, oder sie sind an einer im Inneren des Mischbehälters verlaufenden, gegenüber dem Mischbehälter frei drehbaren, insbesondere starren Achse (gemäss obiger erfindungsgemässer Ausführungsform zur Befähigung der Rotation) befestigt. Solche Ultraschallschwingplatten beschallen den Innenraum des Mischbehälters (oder den Teil davon) dergestalt, dass die Schwingungsebene des Ultraschalls in Richtung der Rotationsachse verläuft.

Andererseits, oder zusätzlich zu den vorstehend beschriebenen senkrecht stehendend Ultraschallschwingplatten, kann eine (vorzugsweise genau eine) im Inneren angebrachte Ultraschallschwingplatte dergestalt vorhanden sein, dass die Rotationsachse des Mischbehälters innerhalb dieser Schwingplatte liegt und die Flächennormale dieser Ultraschallschwingplatte senkrecht auf der Rotationsachse steht. Diese eine Schwingplatte mit Flächennormale senkrecht zur Rotationsachse ist vorzugsweise so angeordnet, dass ihre Flächennormale gegenüber der Vertikalen geneigt ist, etwa um einen Winkel von 20° bis 40°. Für die Verwendung einer solchen Ultraschallschwingplatte ist es bevorzugt, wenn der Mischbehälter eine zylinderförmigen Innenraum aufweist und diese Ultraschallschwingplatte eine rechteckige Form aufweist, dergestalt, dass die längere Seite in Richtung der Rotationsachse verläuft und die kürzere Seite senkrecht zur Rotationsachse steht. Eine solche Ultraschallschwingplatte beschallt den Innenraum des Mischbehälters (oder den Teil davon) dergestalt, dass die Schwingungsebene des Ultraschalls senkrecht zur Rotationsachse verläuft.

Wenn diese Schwingplatte mit Flächennormale senkrecht zur Rotationsachse vorhanden ist, ob alleine für sich oder in Kombination mit den vorstehend diskutierten Schwingplatten mit Flächennormale parallel zur Rotationsachse, ist sie bevorzugt an einer im Inneren des Mischbehälters verlaufenden, gegenüber dem Mischbehälter frei drehbaren, insbesondere starren Achse (gemäss obiger dritter Ausführungsform zur Befähigung der Rotation) befestigt.

Andererseits weist die Ultraschallquelle die Form eines Kastenprofils oder eines Vierkantrohrs auf, das insbesondere im Inneren des Mischbehälters in seiner Längsrichtung verläuft und das einen oder mehrere Ultraschallgeneratoren im Inneren des Kastenprofils oder Vierkantrohrs aufweist, die zur Beschallung der Umgebung des Kastenprofils oder Vierkantrohrs dienen; d.h. die Richtung der Schallausbreitung jedes darin enthaltenen Ultraschallgenerators ist vom Inneren des Kastenprofils oder Vierkantrohrs nach aussen. Vor dem Einbau in eine erfindungsgemässe Vorrichtung ist eine solche Ultraschallquelle an beiden Stirnseiten des Kastenprofils oder Vierkantrohrs offen; nach dem Einbau in die erfindungsgemäss Vorrichtung ist das Kastenprofil oder Vierkantrohr an beiden Stirnseiten mindestens flüssigkeitsdicht verschlossen, da die Ultraschallgeneratoren nicht direkt dem in der Regel eine Flüssigkeit umfassenden Mischgut ausgesetzt werden sollen. Ein solcher Verschluss kann beim Einbau in den Mischbehälter durch die Stirnseiten des Mischbehälters und/oder durch Achsabeschnitte des Mischbehälters und/oder durch Profilstirnplatten, die die beiden Stirnseiten des Kastenprofils oder Vierkantrohrs verschliessen, erfolgen. Der mindestens flüssigkeitsdichte Verschluss ist jedoch dergestalt, dass die Stromzufuhr zu den im Inneren des Kastenprofils oder Vierkantrohrs vorhandenen Ultraschallgeneratoren über geeignet Kabel oder Leitungen gewährleistet bleibt. Eine solche Ultraschallquelle in Form eines Kastenprofils oder Vierkantrohrs, das entweder an beiden Stirnseiten offen oder an beiden Stirnseiten mindestens flüssigkeitsdicht verschlossen ist, ist nach Kenntnis des Erfinders neu und könnte ebenfalls ein Gegenstand der Erfindung sein. Die nähesten bekannten Ultraschallquellen ähnlicher Bauart sind auf dem Gebiet der Ultraschallbäder zur Reinigung vorbekannt, dort sind aber die Ultraschallquellen aussen am Kastenprofil oder Vierkantrohr angebracht und dienen zur Beschallung seines Innenraums, d.h. die Richtung der Schallausbreitung jedes daran angebrachten Ultraschallgenerators ist von aussen nach innen.

Eine dergestalt ausgebildete, orientierte und befestigte Ultraschallschwingplatte mit Flächennormalen senkrecht zur Rotationsachse oder eine Ultraschallquelle in Form eines Kastenprofils oder eines Vierkantrohrs, das in Längsrichtung im Inneren des Mischbehälters verläuft, bewirkt im rotierenden Betrieb des Mischbehälters, dass das Mischgut gleichzeitig gleichmässig durchmischt und der akustischen Kavitation im Innenraum ausgesetzt wird, weil der partikuläre Feststoff des Mischgutes an der oder den Ultraschallquelle(n) fällt oder schwebt. Ausserdem kann das durch die Innenwand des Mischbehälters hochgenommene Mischgut auf diese Ultraschallschwingplatte fallen und an ihr herunterlaufen oder herunterrieseln und wird dabei gleichzeitig durch sie mit Ultraschall beschallt. Das erhöht die Extraktionswirkung der Flüssigkeit oder des Gases im Mischgut auf den partikulären Feststoff des Mischgutes erheblich.

Die Frequenz des Ultraschalls, den die Ultraschallquelle(n) erzeugt(erzeugen), liegt vorzugsweise im Bereich von 20 bis 100 kHz, eher bevorzugt 25 bis 80 kHz. In einer eher bevorzugten Ausführungsform ist die Frequenz des Ultraschalls gewobbelt, d.h. sie variiert zeitlich, insbesondere periodisch, zwischen einer Mindest- und einer Maximalfrequenz. Aus den vorbekannten Verfahren mit hydrodynamischer Kavitation ist bekannt, dass eine hohe Dichte an Kavitationsblasen die wenig Stärke aufweisen, die also z.B. mit hoher Frequenz erzeugt sind, den besten Effekt aufweist. Das kann erfindungsgemäss analog mit der akustischer Kavitation eingesetzt und bewirkt werden.

Für die Kombination von innerhalb des Mischbehälters angeordneten Ultraschallquellen, ihrer Stromversorgung und der zur Rotation des Mischbehälters erforderlichen Drehmomentübertragung sind vier Ausführungsformen offenbart.

Die erste, erfindungsgemässe kombinierte Ausführungsform beinhaltet die obige erste bevorzugte Symmetrievariante, die obige erfindungsgemässe Ausführungsform zur Befähigung der Rotation des Mischbehälters, die Übertragung des Drehmomentes auf den Mischbehälter erfolgt nach einer der drei vorstehend exemplifizierten Varianten der Drehmomentübertragung von aussen, und die Ultraschallquelle(n) ist( sind) an der starren Achse befestigt und ist(sind) daher ebenfalls starr. Die Stromversorgung der Ultraschallquellen erfolgt hier über die starre Achse, die hierzu geeignete elektrische Leitungen aufweist. Gewünschtenfalls kann diese Achse noch gleichzeitig inwändig hohl sein und Perforationen aufweisen, um Druckausgleich und/oder Zufuhr oder Ableitung von Flüssigkeit zu ermöglichen (siehe unten).

Die zweite, nicht erfindungsgemässe kombinierte Ausführungsform beinhaltet die obige erste bevorzugte Symmetrievariante, die obige zweite, nicht erfindungsgemässe Ausführungsform zur Befähigung der Rotation des Mischbehälters mit fest verbundener Achse, die Übertragung des Drehmomentes erfolgt nach einer der drei vorstehend exemplifizierten Varianten der Drehmomentübertragung von aussen, und die Ultraschallquelle(n) ist(sind) an der Achse befestigt und rotiert(rotieren) daher mit der Achse und dem Mischbehälter mit. Um die Stromversorgung der Ultraschallquellen sicherzustellen können zwei in der Technik an sich übliche Schleifringe aussen am Mischbehälter angebracht sein, die mit ortsfesten, über die Schleifringe streifenden Bürsten, insbesondere Kohlebürsten, interagieren und so den Übertritt von elektrischem Strom von einer statischen Spannungsquelle auf den rotierenden Mischbehälter ermöglichen. Von jedem der beiden Schleifringe führt ein isolierter elektrischer Leiter über eine Durchtrittsstelle im Mantel des Mischbehälters in sein Innenvolumen und zu den an der Achse angebrachten Ultraschallquellen, insbesondere UltraschallSchwingplatten. Alternativ kann nur ein Paar Schleifring/Bürste aussen am Mischbehälter angebracht sein, bei dem ein isoliertes Kabel wie vorstehend beschrieben in den Innenraum des Mischbehälters führt; ein zweiter Schleifring ist auf der Achse angebracht und interagiert hier mit einer zweiten Bürste. Der auf die Achse oder Welle übertragene Strom kann mittels eines isolierten elektrischen Leiters zu den Ultraschallquellen beführt werden. Alternativ können zwei gegeneinander isolierte Schleifringe auf der Achse angebracht sein, die je mit einer zugehörigen Bürste interagieren. Hier sorgt die Achse über zwei isolierte elektrische Leiter für die komplette Stromversorgung der Ultraschallquellen. Gewünschtenfalls kann auch hier diese Achse noch gleichzeitig inwändig hohl sein und Perforationen aufweisen, um Druckausgleich und/oder Zufuhr oder Ableitung von Flüssigkeit zu ermöglichen (siehe unten).

Die dritte, nicht erfindungsgemässe kombinierte Ausführungsform beinhaltet die obige erste bevorzugte Symmetrievariante, die obige zweite, nicht erfindungsgemässe Ausführungsform zur Befähigung der Rotation des Mischbehälters mit fest verbundener Welle, die Übertragung des Drehmomentes erfolgt nach der obigen ersten Ausführungsform über die Rotationsachse, und die Ultraschallquelle(n) ist(sind) an der Welle befestigt und rotiert(rotieren) daher mit der Welle und dem Mischbehälter mit. Die Stromversorgung der Ultraschallquelle(n) ist gleich wie bei der vorstehenden zweiten bevorzugten kombinierten Ausführungsform, mit der Massgabe, dass alle Bezugnahmen auf die "Achse" durch Bezugnahmen auf die "Welle" ersetzt werden.

Die vierte, erfindungsgemässe kombinierte Ausführungsform beinhaltet die obige erste bevorzugte Symmetrievariante; die obige erfindungsgemässe Befähigung der Rotation des Mischbehälters mit zwei gegenüber dem Mischbehälter frei drehbaren, starren Achsabschnitten, die in die beiden Lager des Mischbehälters hineinragen; die Übertragung des Drehmomentes erfolgt nach der obigen zweiten Ausführungsform von aussen auf die Aussenfläche des Mischbehälters; und die Ultraschallquelle(n) ist(sind) mit den beiden starren Achsabschnitten verbunden. Die Stromversorgung der Ultraschallquelle(n) ist gleich wie bei der vorstehenden ersten erfindungsgemässen kombinierten Ausführungsform, mit der Massgabe, dass alle Bezugnahmen auf die "starre Achse" durch Bezugnahmen auf einen der beiden "starren Achsabschnitte" ersetzt werden.

In einer ersten Ausführungsform der Temperierung umfasst der erfindungsgemässe Mischer keine Heizung. Wenn er in der Form in der Bierbrauerei eingesetzt wird, würde er sich etwa für das Maischen mittels Infusions- oder Dekoktionsverfahren, eignen. Die für diese Verfahren erforderliche Wärme könnte trotzdem mittels separat aufgeheiztem Wasser oder einem abgetrennten, separat aufgeheizten Teilvolumen der Maische zugeführt werden. Diese erste Ausführungsform eignet sich auch für Extraktionsverfahren unter Kühlung, bei der das Mischgut entweder unter zusätzlicher Zugabe von Eis (siehe unten) innerlich gekühlt oder unter Verwendung von Kühlaggregaten und externen Kühlschlangen von aussen gekühlt wird.

In einer zweiten Ausführungsform der Temperierung umfasst der erfindungsgemässe Mischer eine ausserhalb des Mischbehälters angeordnete Heizung. Diese äussere Heizung kann, insbesondere wenn der Mischbehälter aus Metall wie oben exemplifiziert besteht, eine Induktions-, Gas- oder Dampfheizung sein. Im Falle einer Induktionsheizung könnte typischerweise der Mischbehälter mit einer Spule umwickelt sein, die das für die Induktionsheizung des (dann zwingend elektrisch leitenden) Mischbehälters erforderliche magnetische Wechselfeld erzeugt. Ebenfalls im Falle einer Induktionsheizung könnte der Mischbehälter (der dann elektrisch leitend oder elektrisch isolierend sein kann) im Betrieb vorzugsweise zusätzlich mit Suszeptoren in Form von elektrisch leitenden, insbesondere metallischen Formkörpern, insbesondere in Form von Kugeln, befüllt werden. Diese würden ebenfalls induktiv erhitzt und würden für eine gleichmässigere Erwärmung des Mischguts sorgen. Diese Suszeptoren könnten vorteilhaft auch hohl ausgebildet sein, um eine Dichte dergestalt zu haben, dass sie mittels Auftrieb im Mischgut möglichst schweben und so eine Mahlwirkung auf das Mischgut und den darin enthaltenen partikulären Feststoff möglichst vermeiden.

Es ist bei einer ausserhalb des Mischbehälters angeordneten Heizung zwar möglich, aber nicht erforderlich, dass der gesamte Mischbehälter beheizt wird. Es genügt eine fest installierte äussere Heizung, die nur einen Teil des Mischbehälters (d.h. insbesondere nur einen Teil der Aussenfläche des Mischbehälters) beheizt. Bei einmal gewählten und gegebenem Mischbehälter und einmal gewählter und gegebener Geometrie der Heizung, Zahl der Heizelemente, thermischer Leistung der Heizung und Abstand zwischen Heizung und Aussenfläche des Mischbehälters wird dieser "beheizte" Teil durch eine geschlossene Kurve auf der Aussenfläche des Mischbehälters begrenzt und definiert, und zwar wie folgt: Jeweils zwei Punkte dieser geschlossenen Kurve, die gleichzeitig auf einem senkrecht auf der Rotationsachse liegenden Querschnitt durch den Mischbehälter liegen, sind dadurch definiert, dass sie die beiden Stellen sind, an denen beim Beheizen die an der Aussenfläche des Mischbehälters gemessene Temperatur nicht mehr als 5° Celsius über der konstant bleibenden oder konstant gehaltenen Umgebungstemperatur (d.h. Raumtemperatur, ca. 23°C) liegt, wobei die Messungen im Stillstand und entleertem Zustand des Mischbehälters und im thermischen Gleichgewicht des Mischbehälters durchgeführt wird. Für die Bestimmung dieses "beheizten" Teils der Aussenfläche werden alle Querschnitte durch den Mischbehälter berücksichtigt, bei denen die beiden Punkte mit höchstens 5° Temperaturunterschied voneinander beabstandet sind. Querschnitte, bei denen nur noch ein solcher Punkt ersichtlich ist (die beiden Punkte also zusammenfallen) gelten als die Begrenzung dieses "beheizten" Teils der Aussenfläche in Richtung der Rotationsachse.

Vorzugsweise werden für einen gegebenen Mischbehälter die äussere Heizung, die Geometrie der Heizung, die Heizleistung und der Abstand zwischen Heizung und Aussenfläche des Mischbehälters so gewählt, dass der wie vorstehend definierte und bestimmte "beheizte" Teil der Aussenfläche dergestalt ist, dass an jedem möglichen wie vorstehend definierten Querschnitt durch den Mischbehälter die besagten beiden Punkte mit höchstens 5° Temperaturunterschied, wenn sie je mit einer gedachten Linie, die senkrecht und radial zur Rotationsachse hin verläuft, mit der Rotationsachse verbunden werden, zusammen mit und zwischen diesen gedachten Linien einen Winkel von höchstens 30° einschliessen, und zwar unabhängig von der Drehstellung des Mischbehälters bezüglich der Heizung.

In einer dritten Ausführungsform der Temperierung umfasst der Mischbehälter eine in seinem Inneren angeordnete Heizung. Typischerweise handelt es sich um eine elektrische Heizung in Form von einem oder mehreren Ohm'schen Heizelementen, etwa Stäben. Diese Ohm'schen Heizelemente sind aus einem Material, das elektrisch leitet aber doch einen genügend grossen ohmschen Widerstand aufweist, um sich bei Stromdurchtritt aufzuheizen. Das bevorzugte Material für diese Ohm'schen Heizelemente ist Graphit. Die Heizelemente können eine elektrisch isolierende, wärmresistente Umhüllung, etwa aus einem keramischen Material, umfassen.

Diese inneren Heizelemente können einerseits starr sein, also nicht mit dem Mischbehälter mitrotieren. Hierzu sind sie typischerweise an die im Inneren des Mischbehälters verlaufende starre Achse oder an den zwei starren Achsabschnitten, die gegenüber dem Mischbehälter frei drehbar ist(sind) und in Lager im Mischbehälter hineinragen, angebracht. Sie können auch an einer ebenfalls starren Ultraschallquelle, die ihrerseits an die im Inneren des Mischbehälters verlaufende starre Achse oder starren Achsabschnitten, die gegenüber dem Mischbehälter frei drehbar ist(sind), angebracht ist, befestigt sein. In diesem ersten Fall der starren inneren Heizelemente ist die obige erfindungsgemässe Ausführungsform zur Befähigung der Rotation mit nur zwei Achsabschnitten, die in die beiden Lager des Mischbehälters hineinragen, besonders bevorzugt. Der Mischbehälter wird dann bevorzugt mittels der obigen zweiten Ausführungsform zur Einwirkung des Drehmoments von aussen in Rotation versetzt und der Mischbehälter hat dann bevorzugt eine zylinderförmige Mantelfläche. Die Ultraschallquellen sind hier bevorzugt in Form von ebenfalls starren Kastenprofilen oder Vierkantrohren, die Ultraschallgeneratoren im Inneren enthalten. Die Stromversorgung dieser starren Heizelemente ist bevorzugt über Leitungen oder Kabel, die durch die Achsabschnitte hindurch und in die Heizelemente hineintreten.

Andererseits können die im Inneren des Mischbehälters angeordneten Heizelemente an dem Mischbehälter befestigt sein und mit ihm mitrotieren. In diesem zweiten Fall der mit dem Mischbehälter mitrotierenden Heizelemente ist jede der oben offenbarten Ausführungsformen zur Befähigung der Rotation und jede der obigen Ausführungsformen zur Einwirkung des Drehmoments möglich. Die Ultraschallquellen sind hier bevorzugt in Form von Ultraschallschwingplatten mit Flächennormalen parallel zur Rotationsachse, die hierzu mit geeigneten Öffnungen versehen sein können, durch die diese axialen Heizelemente hindurchtreten, ohne die Ultraschallschwingplatten zu berühren und damit deren Dämpfung zu vermeiden. Im Falle von eckigen solchen Ultraschallschwingplatten würden diese Heizelemente typischerweise in den Aussparungen verlaufen, die zwischen der Innenwand des Mischbehälters und den Kanten der eckigen Ultraschallschwingplatten vorhanden sind. Die Stromversorgung dieser mit den Stirnflächen oder der Innenfläche des Mischbehälters verbundenen Heizelemente ist hier bevorzugt über Schleifringe, die aussen an dem Mischbehälter angebracht sind und mit ortsfesten Bürsten interagieren (siehe oben).

In einer vierten Ausführungsform der Temperierung kann der Mischbehälter eine in seinem Inneren angeordnete Kühlung umfassen. Es kann sich hier um ein Kühlelement ähnlich einer Kühlschlange in einem Kühlschlank oder um einen Wärmetauscher handeln. In beiden Fällen kann die Zu- und Abfuhr des Kühlmittels mit Kühlleitungen erfolgen, die durch zwei gegenüber dem Mischbehälter frei drehbaren und starren Achsabschnitten, die in die beiden Lager des Mischbehälters hineinragen, in den Mischbehälter eintreten. Diese Kühlung ist dann typischerweise fest mit den beiden starren Achsabschnitten verbunden. Die Übertragung des Drehmomentes erfolgt nach der obigen zweiten Ausführungsform von aussen auf die Aussenfläche des Mischbehälters; und die Ultraschallquelle(n) ist(sind) ebenfalls mit den beiden starren Achsabschnitten verbunden. Die Stromversorgung der Ultraschallquelle(n) ist gleich wie bei der vorstehenden ersten erfindungsgemässen kombinierten Ausführungsform, mit der Massgabe, dass alle Bezugnahmen auf die "starre Achse" durch Bezugnahmen auf einen der beiden "starren Achsabschnitte" ersetzt werden.

Im Fall eines Mischbehälters mit zylindrischer Mantelfläche und zwei Stirnseiten würden diese innenliegenden Heizelemente, insbesondere in Form von Stäben, typischerweise axial über mindestens einen Teil der Länge des Mischbehälters (z.B. über 70-95% dieser Länge), oder über die gesamte Länge des Mischbehälters von der einen Stirnseite des Mischbehälters zur anderen, verlaufen.

Ebenfalls bevorzugt werden für einen gegebenen Mischbehälter die äussere Heizung oder die inneren Heizelemente, die Geometrie der Heizung oder der Heizelemente, die Heizleistung und der Abstand zwischen äusserer Heizung und Aussenfläche des Mischbehälters so gewählt, dass das Innenvolumen des Mischbehälters in mit Mischgut befülltem und rotierendem Zustand bis zu einer Innentemperatur von etwa 90° Celsius, oder bis zu 80° Celsius, aufheizbar ist.

In der bevorzugten beheizbaren Form kann im Inneren des Mischbehälter des erfindungsgemässen Mischers während des Heizens ein Überdruck entstehen.

In einer ersten Variante weist der Mischbehälter zum Ausgleich von Überdruck die gegenüber dem Mischbehälter frei drehbare, starre Achse gemäss der obigen dritten bevorzugten Ausführungsform zur Befähigung der Rotation auf, wobei die Achse die Ultraschallquellen, insbesondere Ultraschallschwingplatten, trägt. Für diese erste Variante des Druckausgleichs ist also die obige erste, erfindungsgemäss kombinierte Ausführungsform von innerhalb des Mischbehälters angeordneten Ultraschallquellen, insbesondere Schwingplatten, ihrer Stromversorgung und der zur Rotation des Mischbehälters erforderlichen Drehmomentübertragung bevorzugt. Hier ist aber diese Achse zusätzlich inwändig hohl, wobei deren innerer Hohlraum mittels Perforationen mit dem Innenvolumen des Mischbehälters in flüssigkeits- und/oder gasleitendem Kontakt stehen. Diese Perforationen sind vorzugsweise kreisförmig und mit einem Durchmesser der genügend klein ist, um keine Partikel des partikulären Festkörpers hindurchzulassen. Diese inwändig hohle Achse fängt typischerweise an, sich mit Flüssigkeit des Mischgutes zu füllen, sobald in den Mischbehälter solches Mischgut bis zu einer Füllhöhe eingefüllt wird, die mindestens teilweise oberhalb der Achse liegt. Die inwändig hohle Achse führt aus dem Mischbehälter heraus und ist mit einem ebenfalls hohlen und oben offenen Steigrohr verbunden. Dieses Steigrohr kann als nach oben zeigendes starres Rohr oder als nach oben zeigender Schlauch ausgebildet sein. Dieses Steigrohr führt bis zu einer Höhe dergestalt hinauf, dass darin eine Flüssigkeitssäule stehen kann, die so hoch ist, dass ihr hydrostatischer Druck gleich gross ist wie ein maximal zulässiger Druck im Inneren des Mischbehälters und den Füllstand des Behälters ggf. in einem Schauglas anzeigt. Bei dieser Variante ist über die inwändig hohle Achse und das Steigrohr mittels Flüssigkeitsverschiebungen ein Druckausgleich zwischen Mischbehälter und Umgebung möglich. Wenn der Druck im Mischbehälter steigt, wird ein zusätzlicher Teil der Flüssigkeit des darin enthaltenen Mischgutes über die Perforationen der Achse in die inwändig hohle Achse und in das Steigrohr gedrückt, worauf der Flüssigkeitsspiegel im Steigrohr ansteigt. Dadurch steigt der hydrostatische Druck im Steigrohr etwas und andererseits wird der steigende Innendruck im Mischbehälter kompensiert. Sinkt der Innendruck im Mischbehälter fliesst Flüssigkeit aus dem Steigrohr zurück in die inwändig hohle Achse und über ihre Perforationen in den Innenraum des Mischbehälters, worauf der Flüssigkeitsspiegel im Steigrohr sinkt. Dadurch sinkt der hydrostatische Druck im Steigrohr und der sinkende Innendruck im Mischbehälter wird kompensiert. Da die Druckschwankungen im Mischbehälter langsam sind und der Flüssigkeitsaustausch zwischen Mischbehälter schnell ist ist das System immer nahezu im Gleichgewicht, in dem der besagte hydrostatische Druck im Steigrohr immer gleich dem Druck im Mischbehälter ist. Für diese zweite Variante wird bevorzugt die oben erwähnte erste bevorzugte Ausführungsform für die Kombination von innerhalb des Mischbehälters angeordneten Ultraschallquellen, ihrer Stromversorgung und Übertragung des zur Rotation des Mischbehälters erforderlichen Drehmomentübertragung eingesetzt, weil hier keine drehbares Lager zwischen Achse und Steigrohr erforderlich ist.

In einer zweiten Variante weist der Mischbehälter zum Ausgleich von Überdruck ebenfalls die gegenüber dem Mischbehälter frei drehbare, starre Achse gemäss der obigen erfindungsgemässen Befähigung der Rotation auf, wobei die Achse die Ultraschallquellen, insbesondere Ultraschallschwingplatten, trägt. Für diese zweite Variante des Druckausgleichs ist also ebenfalls die obige erste, erfindungsgemässe kombinierte Ausführungsform von innerhalb des Mischbehälters angeordneten Ultraschallquellen, insbesondere Schwingplatten, ihrer Stromversorgung und der zur Rotation des Mischbehälters erforderlichen Drehmomentübertragung bevorzugt. Die Achse ist aber hier nicht durchgehend, sondern an einer Stelle unterbrochen. Auf jedem der beiden Teilstücke der unterbrochenen Achse kann eine oder mehrere der Ultraschallquellen, insbesondere Ultraschallschwingplatten, befestigt sein. Zur zusätzlichen Fixierung dieser Teilstücke der Achse können Streben wie oben beschrieben vorgesehen sein, die aber hier mittels eines Aussenlagers das Teilstück der Achse drehbar umfassen und so gleichzeitig ein Abstützung dieses Teilstücks an der Innenwand des Mischbehälters und dessen freie Rotation gegenüber diesem Teilstück ermöglichen. Diese zusätzliche Abstützung ist insbesondere dann von Vorteil, wenn die besagte Unterbrechung der Achse nahe am einen der beiden

Durchstosspunkte der Rotationsachse durch den Mischbehälter liegt und dann ein sehr kurzes Teilstück der Achse (vermutlich ohne Ultraschallquellen, insbesondere Ultraschallschwingplatten) und ein langes Teilstück der Achse (vermutlich mit allen Ultraschallquellen, insbesondere Ultraschallschwingplatten) vorhanden ist, und diese lange Teilstück zusätzlich abgestützt sein soll. Das eine der beiden Teilstücke der Achse ist inwändig hohl und an seinem im Mischbehälter liegenden Ende offen, so dass dieses Teilstück mit dem Innenvolumen des Mischbehälters in flüssigkeits- und/oder gasleitendem Kontakt stehen. Diese im Mischbehälter liegende Öffnung ist vorzugsweise kreisförmig und mit einem Durchmesser der genügend klein ist, um keine Partikel des partikulären Festkörpers hindurchzufassen. Diese inwändig hohle Teilstück der Achse fängt typischerweise an, sich mit Flüssigkeit oder Gas des Mischgutes zu füllen, sobald in den Mischbehälter solches Mischgut bis zu einer Füllhöhe eingefüllt wird, die mindestens teilweise oberhalb der Achse liegt. Das inwändig hohle kürzere Teilstück der Achse führt aus dem Mischbehälter heraus und ist mit einem ebenfalls hohlen und oben offenen Steigrohr verbunden. Die Funktionsweise des Druckausgleichs mit diesem nach oben offenen Steigrohr ist gleich wie bei der vorstehend beschriebenen zweiten Variante.

In einer dritten Variante kann der Mischbehälter an mindestens einer Stelle (etwa an einem der Verschlüsse) ein Diaphragma mit einer darin eingespannten gaspermeablen aber flüssigkeitsdichten Membran aufweisen. Dieses Diaphragma ermöglicht einen allmählichen Druckausgleich durch Austritt von Gas, insbesondere von Sauerstoff, Kohlendioxid, Stickstoff und/oder Argon, nicht aber den Austritt von Flüssigkeit. Das Diaphragma funktioniert während der Rotation des Mischbehälters aufgrund des abwechselnden Eintauchens in den Flüssigkeitsspiegel (Membran dicht) und beim Auftauchen aus dem Flüssigkeitsspiegel (Membran erlaubt Druckausgleich durch Gasdurchtritt). Beim anschliessenden Abkühlen gleicht das Diaphragma einen allfälligen sich bildenden Unterdruck durch Rückübertritt von Gas diesen wieder aus. Solche gaspermeablen aber flüssigkeitsdichten Membranen sind bekannt. Es handelt sich insbesondere um Membranen aus perfluorierten Polymeren, etwa Polytetrafluorethylen. Aufgrund des perfluorierten und daher chemisch inerten Zustands sind solche Membranen auch für die Lebensmittelanwendung zugelassen.

Aufgrund des Rotierens des Mischbehälters ist eine lokale Überhitzung des Mischbehälters und/oder die allenfalls damit einhergehende Deterioration, Inaktivierung oder Denaturierung von im Mischgut vorhandenen Bestandteilen und/oder ein Siedeverzug praktisch ausgeschlossen. In dieser Ausführungsform mit Heizung eignet sich der erfindungsgemässe Mischer neben den beiden vorstehend genannten Maischverfahren auch für das Kesselmaischverfahren.

Zur Sicherstellung eines gewünschten Temperaturprogramms während des Heizens weist der Mischbehälter dieser bevorzugten Ausführungsform vorzugsweise auch einen oder mehrere Temperatursensoren auf, von denen typischerweise mindestens einer in der Nähe der Innenfläche des Mischbehälters, oder auch direkt an seiner Innenfläche, und mindestens einer in der Nähe der Rotationsachse oder auch direkt an der Rotationsachse (d.h. direkt auf einer entlang der Rotationsachse verlaufenden Achse) angeordnet ist. Die Messignale können über Leitungen, ähnlich wie oben für die Stromversorgung der Ultraschallquellen exemplifiziert, oder per Funk erfolgen. Die Stromversorgung der Sensoren kann per Batterie oder Akkumulator oder ebenfalls über Leitungen wie oben für die Stromversorgung der Ultraschallquellen exemplifiziert erfolgen.

In einer bevorzugten Ausführungsform des erfindungsgemässen Mischers ist ein Teil seines Innenvolumens mittels eines Gitters, das nahe an der Innenfläche des Mischbehälters verläuft, vom Rest seines Innenvolumens abgetrennt; dergestalt, dass der Übertritt von Flüssigkeit vom Rest des Innenvolumens in den abgetrennten Teil des Innenvolumens möglich ist, nicht aber der Übertritt von partikulärem Feststoff. Das Gitter erfüllt die Funktion eines Siebes während einem Schritt des Abfiltrierens von partikulärem Feststoff von Flüssigkeit.

Wenn der erfindungsgemässe Mischer in der Bierherstellung verwendet werden soll, so ist das Gitter insbesondere während einem Schritt des Abläuterns das Sieb für das Malz und ist daher vorzugsweise genügend feinmaschig, um den Durchtritt von Malzpartikeln selbst in der feinstmöglichen, für die Bierherstellung üblichen Schrotung zu verhindern. Die Maschengrösse des Gitters liegt bevorzugt im Bereich von 1,3 bis 0,1 mm, was der übliche Bereich für das Rückhalten von Spelzen oder Malzgriess in den für die Bierherstellung üblichen Schrotgrössen darstellt. Eher bevorzugt weist das Gitter dann eine der folgenden Maschengrössen auf:

| Maschengrösse | Bevorzugter abfiltrierbarer Feststoff aus der Malzschrotung |
|---|---|
| 1,25 mm | Spelzen |
| 1 mm | Grobgriess |
| 0,5 mm | Feingriess 1 |
| 0,25 mm | Feingriess 2 |

Besonders bevorzugt weist das Sieb eine Maschengrösse im Bereich von 0,1 bis 0,25 mm auf, um gleichzeitig alle der oben erwähnten Feststoffe des Malzes gleichzeitig abfiltrieren zu können.

Das Gitter ist vorzugsweise in Form eines Lochgitters ausgebildet und besteht vorzugsweise ebenfalls aus einem Metall wie oben für den Mischbehälter exemplifiziert. Die vorstehenden Bezugnahmen auf "Maschengrössen" sind in dem Fall als Bezugnahmen auf "Lochdurchmesser" von vorzugsweise etwa kreisrunden Löchern des Lochgitters zu verstehen.

Das Gitter trennt vorzugsweise nur einen geringen Teil des Innenvolumens vom Rest des Innenvolumens des Mischbehälters ab, eher bevorzugt 5-15% dieses Innenvolumens. Dieser abgetrennte Teil des Innenvolumens ist einerseits durch die geometrische Aussenfläche des Gitters und andererseits durch den an den abgetrennten Teil des Innenvolumens angrenzenden Bereich der Innenfläche des Mischbehälters definiert, und wird durch die Verbindungsnaht vom Rand des Gitters mit der Innenfläche des Mischbehälters abgeschlossen.

Um einen wie vorstehend definierten Teil des Innenvolumens vom Rest des Innenvolumens abzugrenzen ist die besagte geometrische Aussenfläche des Siebes vorzugsweise dergestalt gewölbt, dass auf jeder gedachten Line, die senkrecht und radial von der Rotationsachse des Mischbehälters nach aussen zeigt, eine erste Distanz zwischen Rotationsachse und dem Durchstosspunkt dieser Linie mit der geometrischen Aussenfläche des Gitters um höchstens 10% kleiner ist als eine zweite Distanz zwischen Rotationsachse und dem Durchstosspunkt dieser Linie mit der Innenfläche des Mischbehälters, wobei der prozentuale Unterschied zwischen erster und zweiter Distanz für solche gedachte Linien, die von der Rotationsachse zu einem Mittelpunkt oder zu einer Mittellinie des Siebes zeigen, am grössten ist; für gedachte Linien, die von der Rotationsachse zu einem anderen Punkt als der Mittelpunkt oder als die Mittelline des Gitters zeigen, geringer ist, und für solche gedachte Linien, die von der Rotationsachse zur besagten Verbindungsnaht zeigen, gegen null geht oder null wird. Eher bevorzugt fällt dieser prozentuale Unterschied von denjenigen gedachten Linien, die zum Mittelpunkt oder der Mittellinie des Gitters zeigen, bis zu denjenigen gedachten Linien, die zur Verbindungsnaht zeigen, monoton ab. In einer besonders bevorzugten Ausführungsform, wenn der Mischbehälter ein zylindrisches Innenvolumen aufweist, das von einer Innenfläche mit einem ersten Krümmungsradius definiert wird, weist das Gitter die Form eines Zylindersegments auf, dessen geometrische Aussenfläche einen zweiten Krümmungsradius aufweist, der grösser ist als der erste Krümmungsradius, insbesondere wobei der zweite Krümmungsradius 1 bis 10% grösser ist als der erste Krümmungsradius.

Das Gitter kann fest mit der Innenfläche des Mischbehälters verschweisst bzw. verklebt sein. so dass die besagte Verbindungsnaht eine Schweissnaht oder eine Klebefuge ist. Alternativ kann, insbesondere wenn der Mischbehälter ein zylindrisches Innenvolumen aufweist und das Gitter die Form eines Zylindersegments hat, das Gitter in geeignete Halterungen, die an der Innenfläche angebracht sind, auswechselbar eingespannt werden.

Zum Zweck des Abfiltrierens mittels des Gitters weist der Mischbehälter in diesem Fall mindestens eine verschliessbare Öffnung auf, die von der Umgebung in den abgetrennten Teil seines Innenvolumens anliegt, die flüssigkeits- und/oder gasdicht mittels eines Verschlusses verschliessbar ist, und die zum Ableiten von Flüssigkeit aus dem abgetrennten Teil des Innenvolumens befähigt ist. Andererseits weist der Mischbehälter in diesem Fall auch mindestens eine Öffnung auf, die von der Umgebung in den Rest des Innenvolumens führt, die flüssigkeits- und/oder gasdicht mittels eines Verschlusses verschliessbar ist, und die zum Einfüllen von Mischgut in diesen Rest des Innenvolumens und/oder zum Ableiten von Mischgut aus diesem Rest des Innenvolumens befähigt ist.

Im Folgenden wird die Erfindung anhand von in den Zeichnungen dargestellten Ausführungsbeispielen beschrieben. Es zeigen:
- Fig. 1: eine transparente perspektivische Ansicht des Mischbehälter eines erfindungsgemässen Mischers;
- Fig. 2: eine Schnittdarstellung des Mischbehälter des erfindungsgemässen Mischers von Fig.1; wobei die Schnittebene senkrecht auf seiner Rotationsachse steht;
- Fig. 3: eine transparente schematische Seitenansicht des Mischbehälters eines erfindungsgemässen Mischers;
- Fig. 4: verschiedene Ansichten einer Ausführungsform eines Mischers der Erfindung mit einem Mischbehälter, der eine Ultraschallquelle in Form eines Kastenprofils oder Vierkantrohrs aufweist;
- Fig. 5: Zeigen die Ergebnisse von vier Maischversuchen unter verschiendenen Bedingungen, bei denen ein erfindungsgemässer Mischer mit Konstruktion gemäss Fig. 4 verwendet wurde.

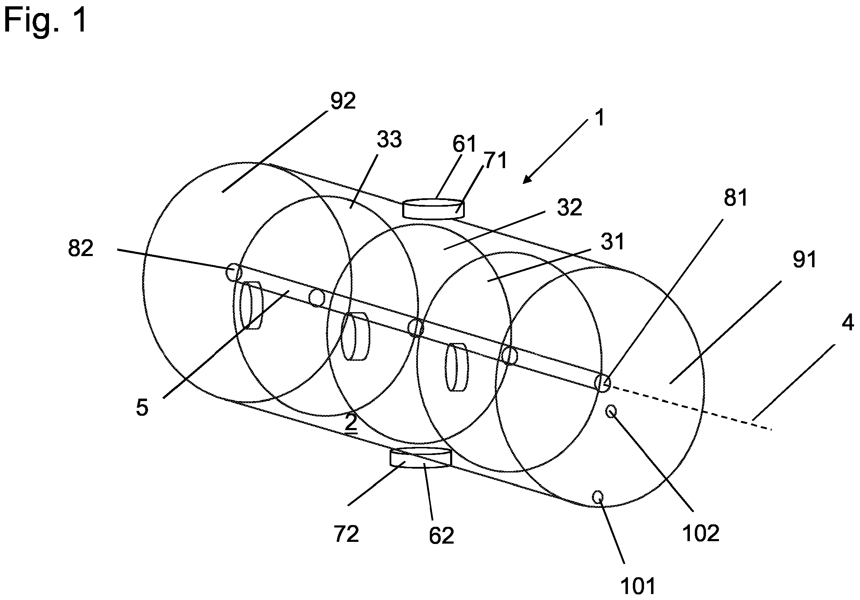

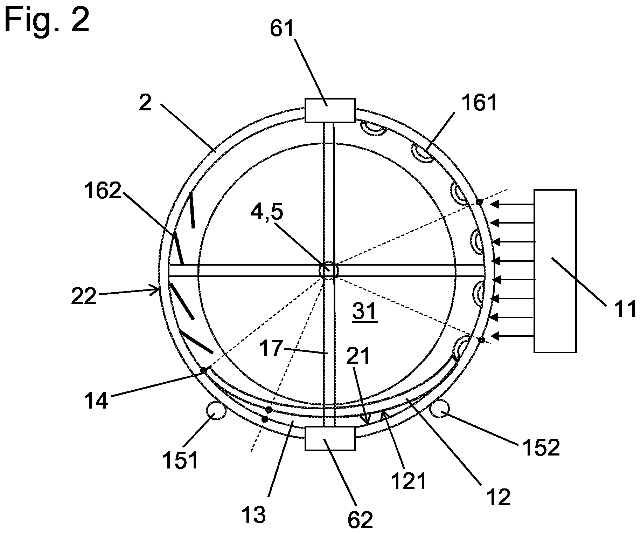

Fig. 1 und 2 illustrieren eine bevorzugte Ausführungsform des erfindungsgemässen Mischers 1 mit einem rotationssymmetrischen Mischbehälter 2, insbesondere einem Mischbehälter 2 mit zylindrischer Aussenfläche 22. Der Mischbehälter 2 hat ein Innenvolumen von etwa 15 m³. Fig.1 zeigt eine transparente Darstellung seines Mischbehälters 2. Dieser Mischbehälter 2 weist eine zylindrische Aussenform und eine entlang seiner Rotationsachse 4 verlaufende Achse 5. In dieser Ausführungsform ist die Achse 5 gegenüber dem Mischbehälter frei drehbar und rotiert nicht mit dem Mischbehälter 2 mit. ist also starr. Die Achse 5 verläuft durch zwei Lager 81,82, von denen jedes in einer der beiden Stirnseite 91,92 des zylindrischen Mischbehälters 2 eingelagert ist. In dieser Ausführungsform ist mindestens eine der beiden Stirnseiten 91,92 abnehmbar, um eine Reinigung des Innenvolumens zu Mischbehälters 2 zu vereinfachen.

Der Mischbehälter 2 umfasst vier in seinem Inneren angeordnete Ultraschallschwingplatten 31,32,33,34 auf, die nur an der nicht mitrotierenden Achse 5 befestigt sind. Davon sind drei Ultraschallschwingplatten 31,32,33 von dem vorstehend beschriebenen Typ, bei dem die Flächennormale parallel zur Rotationsachse verläuft. Die vierte Ultraschallschwingplatte 34 ist von dem vorstehend beschriebenen rechteckigen Typ, bei dem die Flächennormale gegenüber der Vertikalen um einen gewissen Winkel von etwa 20° geneigt ist (in der Figur mit gestrichelten Linien angedeutet). **In** dieser Ausführungsform erfolgt die Stromversorgung der (nicht gezeigten) Ultraschallgeneratoren auf den Schwingplatten 31,32,33,34 über die nicht mitrotierende Achse 5. Die totale Ultraschallleistung der drei Ultraschallplatten beträgt etwa 29 kW; die Ausbreitungsrichtung des Ultraschalls ist in etwa entlang der Rotationsachse 4.

Der Mischbehälter 2 umfasst auch fünf Öffnungen, die je mittels eines Verschlusses flüssigkeits- und/oder gasdicht verschliessbar sind (zwei der Öffnungen sind mit Bezugszeichen 61,62 versehen und die zugehörigen Verschlüsse mit Bezugszeichen 71,72).

In dieser Ausführungsform ist der erfindungsgemässe Mischer beheizbar. Diese Heizung ist in Fig. 2 mit Bezugszeichen 11 angegeben; in Fig.1 sind zwei zugehörige Temperatursensoren 101,102 gezeigt, die auf der ersten Stirnseite 91 des Mischbehälters 2 angeordnet sind, wovon der erste, 101, in der Nähe der Innenfläche 21 des Mischbehälters 2 angeordnet ist und der zweite, 102, in der Nähe der Rotationsachse 4. Fig. 2 ist eine Schnittdarstellung durch den Mischbehälter 2, wobei die Schnittebene parallel zu und nahe an der Schwingplatte 31, wie in Fig.1 gezeigt, verläuft. Der Mischbehälter 2 ist mittels einer Heizung 11 beheizbar. Der "beheizte" Teil der Aussenfläche, wie im allgemeinen Teil der Beschreibung definiert, ist hier nur als deren zwei Punkte (schwarze Punkte) sichtbar, die gleichzeitig auf der in Fig. 2 liegenden Querschnitt durch den Mischbehälter liegen. Von diesen beiden Punkten verlaufen senkrecht und radial zwei gestrichelte Linien zur Rotationsachse 4, die die beiden Punkte mit dieser Rotationsachse dergestalt verbinden, das die beiden Punkte zusammen mit den beiden Linien und zwischen diesen Linien einen Winkel von gerade etwa 30° einschliessen. Diese beiden Punkte stellen zwei Punkte auf der Begrenzungslinie des "beheizten" Teils der Aussenfläche des Mischbehälters dar, wobei diese beiden Punkte auf dem hier gezeigten Querschnitt durch den Mischbehälter liegen. Für jeden anderen Querschnitt, der gegenüber dem hier gezeigten Querschnitt in Richtung der Rotationsachse 4 versetzt ist, ergäben sich zwei neue Punkte dieser Begrenzungslinie.

Die in Fig.1 und 2 gezeigte Ausführungsform ist ausserdem mit einem Gitter 12 ausgestattet, das bei einem Einsatz in der Bierbrauerei u.a. zum Abläutern der Maische dienen würde. Dieses Gitter 12 trennt einen nahe an der Innenfläche 21 des Mischbehälters 2 verlaufenden Teil 13 des Innenvolumens des Mischbehälters 2 vom Rest seines Innenvolumens ab. Von der Umgebung mündet eine flüssigkeits- und/oder gasdicht verschliessbare Öffnung 62 (es wäre dieselbe Öffnung 62 wie in Fig.1) in diesen abgetrennten Teil 13 des Innenvolumens ein. Der hier gezeigte abgetrennte Teil 13 des Innenvolumens entspricht einer bevorzugten Ausgestaltung aus dem allgemeinen Teil der Beschreibung: Die besagte geometrische Aussenfläche 121 des Gitters 12 ist dergestalt gewölbt, dass die Distanz, die zwischen dieser Aussenfläche 121 und der Innenfläche 21 des Mischbehälters 2 entlang jeder gedachten Line, die senkrecht und radial von der Rotationsachse 4 des Mischbehälters 2 nach aussen zeigt, gemessen wird, von der Mittellinie des Gitters (diese würde hier an der Stelle der Öffnung 62 sein und senkrecht auf der Blattebene stehen) zur Verbindungsnaht 14 zwischen Gitter 12 und Innenfläche 21 des Mischbehälters 2 monoton abnimmt. Es sind zwei beispielhafte solche gestrichelte Linien eingezeichnet. Bei der ersten, die näher bei der Öffnung 62 verläuft, ist ein solcher Abstand mit zwei schwarzen Punkten angegeben; er beträgt etwa 10%-20% der Distanz, die auf dieser Linie zwischen Rotationsachse 4 und dem Durchstosspunkt dieser Linie mit der Aussenfläche 21 des Mischbehälters (der untere der beiden schwarzen Punkte) gemessen wird. Bei der zweiten, die zur Verbindungsnaht 14 hin verläuft, ist diese Distanz gerade null, was als nur ein schwarzer Punkt dargestellt wird.

Bei der Ausführungsform von Fig.1 und 2 erfolgt die Drehmomentübertragung auf die Aussenfläche 22 des Mischbehälters 2 mittels Rollen oder Walzen 151,152 und 153,154. Vorzugsweise verlaufen die Walzen an der Unterseite und entlang der ganzen Länge des zylindrischen Mischbehälters 2.

Der erfindungsgemässe Mischer dieser Ausführungsform kann auch an der Innenfläche 21 des Mischbehälters 2 angeordnete Mischwerkzeuge in Form von Schwellen 161 oder Schaufeln 162 umfassen. Ebenfalls kann er in dieser Ausführungsform im Inneren des Mischbehälters 2 Streben umfassen (eine von vier ist mit Bezugszeichen 17 versehen), die einerseits mit der Innenfläche 21 des Mischbehälters 2 fest verbunden sind und andererseits drehbar auf der nicht mitrotierenden Achse 5 gelagert sind. Diese Streben können hierzu optional auch, wie in Fig. 2 gezeigt, an einer Durchtrittstelle durch das Gitter 12 hindurchtreten. Diese Streben 17 bewirken eine innere statische Versteifung des Mischbehälters 2 und können gleichzeitig die Funktion von zusätzlichen Mischwerkzeugen übernehmen.

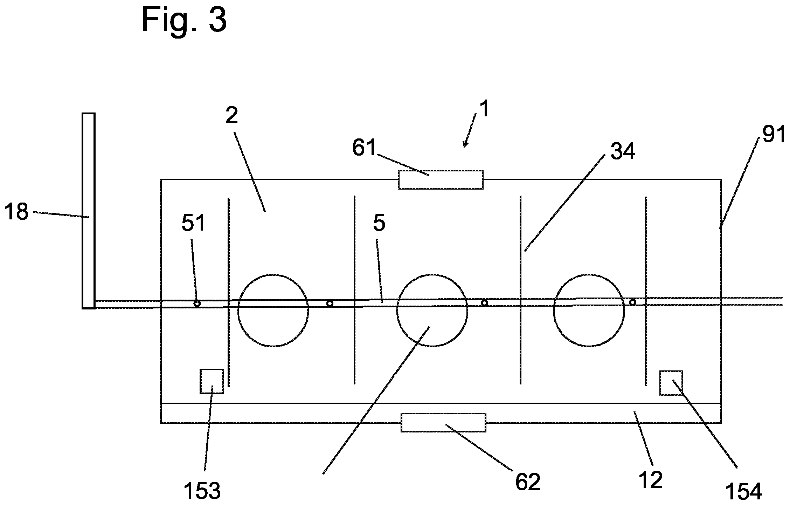

Fig. 3 zeigt eine weitere Ausführungsform des erfindungsgemässen Mischers. Er umfasst hier eine starre Achse 5, die inwändig hohl ausgebildet ist und eine Mehrzahl von Perforationen aufweist (eine ist mit Bezugszeichen 51 versehen). Die Perforationen stellen eine Verbindung zwischen dem Innenvolumen des Mischbehälters 2 und dem Hohlraum in der Achse 5 her. Die Achse 5 führt zu einem nach oben weisenden Steigrohr 18. Die Achse 5 und das Steigrohr 18 bis zu einer bestimmten Füllhöhe füllen sich typischerweise bereits beim Befüllen des Mischbehälters mit Mischgut mit Flüssigkeit. Die Kombination von inwändig hohler Achse 5, ihren Perforationen 51 und dem Steigrohr 18 sorgen für einen Druckausgleich mittels Flüssigkeitsaustausch zwischen Mischbehälter und Steigrohr im rotierenden Betrieb des Mischers und insbesondere während einem gleichzeitigen Schritt des Aufheizens des Mischgutes während des Mischens. Hierzu weist auch diese Ausführungsform bevorzugt eine (in der Figur nicht gezeigte) Heizung auf. Gezeigt sind auch zwei an der Unterseite der Mischbehälters 2 verlaufenden Walzen 153,154 zum Antrieb des zylindrischen Mischbehälters 2. Im bevorzugten Fall, wie bei Fig. 2 erwähnt, würden die Walzen 153,154 zu einer einzigen durchgehenden, an der Unterseite und entlang der ganzen Länge des zylindrischen Mischbehälters verlaufenden Walze vereinigt.

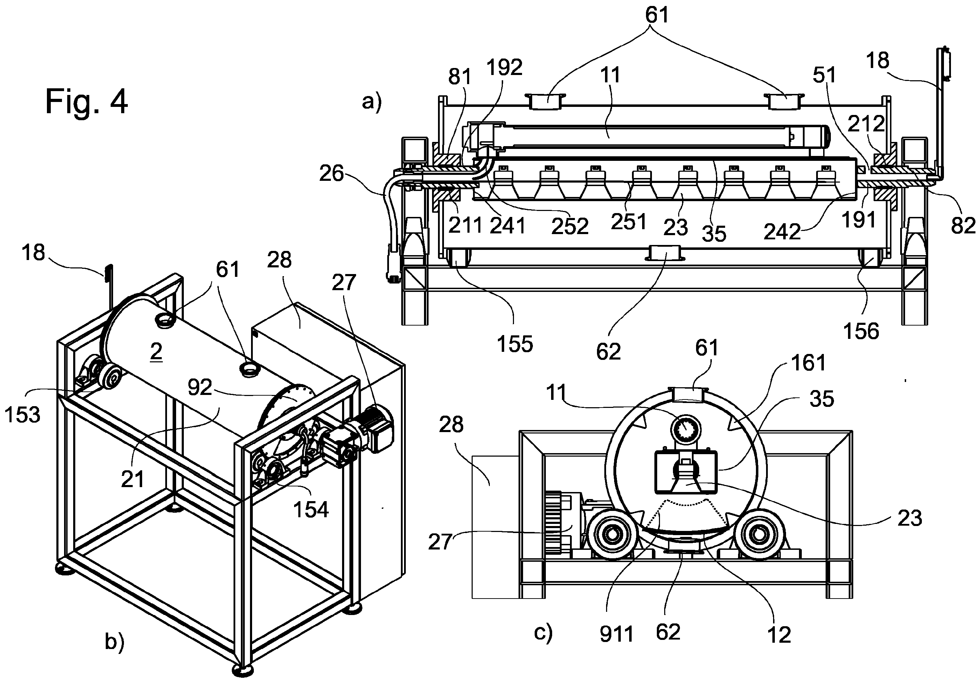

Fig.4 zeigt Darstellungen eines erfindungsgemässen Mischers, und zwar als Schnittansicht (a), perspektivische Sicht (b) und Vorderansicht mit entfernter Stirnseite des Mischers (c). Gezeigt ist der Mischbehälter 2 mit zwei Einlassöffnungen 61 und einer Auslassöffnung 62. Der Mischbehälter 2 ist hier auf vier Walzen 153,154,155,156 rotierbar gelagert. In der Schnittansicht (a) ist die drehbare Lagerung des Mischbehälters 2 mittels zwei starren (fallend schraffierten) Achsabschnitten 191,192, die in zwei (ansteigend schraffierte) Lager 81,82 hineinragen, gezeigt. Eine mindestens flüssigkeitdichte Abdichtung zwischen starren und drehenden Teilen ist mit Dichtungen 211,212 erfolgt. Der Mischbehälter 2 enthält eine starre Ultraschallquelle 35 in Form eines Kastenprofils oder eines Vierkantrohrs, das axial entlang etwa 90% der Länge des Mischbehälters 2 verläuft und das fest mit den beiden starren Achsabschnitten 191,192 verbunden ist. Diese Ultraschallquelle 35 weist in ihrem Inneren acht Ultraschallgeneratoren auf (einer ist mit Bezugszeichen 23 versehen). Die Ultraschallgeneratoren zeigen mit ihren Schallöffnungen nach unten und weisen also eine Schallrichtung auf, die vom Inneren des Kastenprofils oder des Vierkantrohrs nach aussen zeigt. Das Kastenprofil oder Vierkantrohr ist mittels Profilstirnplatten 241,242 und mittels der Achsabschnitte 191,192 an seinen Stirnseiten mindestens flüssigkeitsdicht gegen dem Innenraum des Mischbehälters abgedichtet. Der zum Steigrohr 18 proximale erste Achsenabschnitt 191 ist hohl ausgebildet und weist eine Perforation 51 auf; er dient als hohle Achse 5 und sorgt zusammen mit dem Steigrohr 18 für den im allgemeinen Teil beschriebenen Druckausgleich. Der zum Stromanschluss 26 proximale zweite Achsenabschnitt 192 ist als Drehdurchführung für die elektrische Kabel oder Leitungen 251,252 ausgebildet. Fest mit der Ultraschallquelle 35 verbunden, und daher ebenfalls starr, ist eine innere Heizung 11 in Form eines keramischen Heizelements, das inwändig einen Graphitstab als Ohm'scher Widerstand aufweist. Die Stromzufuhr für die Ultraschallgeneratoren 23 ist mittels des Kabels oder der Leitung 251 sichergestellt und die Stromzufuhr für die innere Heizung 11 mittels des Kabels oder der Leitung 252. Die perspektivische Ansicht (b) zeigt das Antriebsprinzip mit den vier Walzen 153,154,155,156. Davon wirkt die Walze 155 (siehe (a)) als Antriebswalze, die mittels eines Motors mit Getriebe 27 ein Drehmoment auf die Aussenfläche 21 des Mischbehälters 2 übertragt und ihn so in Rotation versetzt. Die restlichen Walzen 153,154, 156 laufen leer mit und stützen den Mischbehälter 2 während seiner Rotation ab. Gezeigt ist wieder das Steigrohr 18, das für den Druckausgleich sorgt. Gezeigt ist auch ein Steuerungskasten 28, der dir für die Steuerung der Ultraschallquellen 23 und des Motors/Getriebes 27 nötige Steuer- und Antriebselektrik enthält. Der Motor ist typischerweise en Synchronmotor, der mittels geeigneter Polzahl und geeigneter zugehöriger Wechselspannung für jeden der Pole eine frei wählbare Drehzahl des Mischbehälters 2 erlaubt. In Seitenansicht (c) ist die Anordnung der Ultraschallquelle 35, der inneren Heizung 11, des Siebs 12 zur Abtrennung eines Teils des Innenvolumnens des Mischbehälters und vier Schaufeln (eine ist mit Bezugszeichen 161 versehen) verdeutlicht. Die entfernte Stirnseite würde das Bezugszeichen 91 haben. Gepunktet gezeichnet ist eine zum Entleeren des Mischbehälters vorhandene verschliessbare Öffnung 911, die ebenfalls in der entfernten Stirnseite 91 vorhanden wäre.

Der erfindungsgemässe Mischer eignet sich für alle Verarbeitungsverfahren, in denen ein partikulärer Feststoff wie oben exemplifiziert mit einer Flüssigkeit wie oben exemplifiziert extrahiert werden soll, wobei der partikuläre Feststoff mit der Flüssigkeit durchmischt wird. Der erfindungsgemässe Mischer bewirkt durch die Kombination von Freifallmischung und gleichzeitiger Beschallung des Mischgutes mit Ultraschall eine wesentlich schnellere Extraktion des partikulären Feststoffs mit der Flüssigkeit. Ein bevorzugtes Einsatzgebiet des erfindungsgemässen Mischers ist in der Bierbrauerei.

Ein erfindungsgemässes Extraktionsverfahren (insbesondere Maischen) ist analog zu einem entsprechenden vorbekannten Verfahren, aber bei dem als Extraktionsgefäss (also insbesondere als Maischpfanne) ein erfindungsgemässer Mischer verwendet wird. Die Verfahrensparameter des erfindungsgemässen Verfahrens können typisch identisch zum entsprechenen vorbekannten Verfahren sein, ausser dass gleichzeitig mit Ultraschall beschallt und der Mischbehälter rotiert wird.

Das erfindungsgemässe Extraktionsverfahren (insbesondere Maischen) könnte auch analog zu einem allfälligen vorbekannten entsprechenden Extraktionsverfahren sein, das nur Beschallung mit Ultraschall aber keine Rotation des Extraktionsgefässes verwendet, wobei aber dann gleichzeitig der als Extraktionsbehälter verwendete erfindungsgemässe Mischbehälter rotiert wird. Bei einem solchen erfindungsgemässen Extraktionsverfahren (insbesondere Maischen) könnte aber aufgrund der Synergie von Beschallung mit Ultraschall und Rotation des Mischbehälters zunächst eine Rotation des Mischbehälters frei gewählt werden, die vorzugsweise im Bereich von 5 - 50 U/min, eher bevorzugt 10 - 30 U/min liegt, und mit und bei dieser gewählten Rotation des Mischbehälters
a) die Dauer des Extraktionsverfahrens bei gleichbleibender Ultraschallfrequenz und -leistung gegenüber dem vorbekannten entsprechenden vorbekannten Extraktionsverfahren soweit verkürzt werden; und/oder
b) die Ultraschallfrequenz gegenüber dem vorbekannten entsprechenden vorbekannten Extraktionsverfahren bei geichbleibender Ultraschallleistung und Dauer soweit verringert werden; und/oder
c) die Leistung des Ultraschalls bei gleichbleibender Ultraschallfrequenz und Dauer soweit verringert werden;
dass trotzdem noch dieselbe Extraktionsleistung aus dem partikulären Feststoff (also beim Maischen aus dem Malz) wie beim vorbekannten entsprechenden Extraktionsverfahren, oder sogar eine bessere Extraktionsleistung, erzielt wird. Vorzugsweise ist es obige Alternative b); die Verringerung der Ultraschallfrequenz kann eine schonendere Extraktion (Vermeidung von Sonochemie) und/oder die Verwendung einfacherer Ultraschallquellen und/oder eine längere Lebensdauer des erfindungsgemässen Mischers bedeuten. Der Vergleich der Extraktionsleistungen könnte über das Ausmass und/oder die Geschwindigkeit der Extraktion sein. Im Falle eines Vergleichs zwischen einem allfääligen vorbekannten Maischen mit nur Ultraschall und erfindungsgemässem Maischen mit Ultraschall und Rotation des Mischbehälters wäre der Vergleich der Extraktionsleistungen typischerweise über die Bestimmung der Plato-Grade. Als "analoges" erfindungsgemässes Verfahren wird hier ein Verfahren verstanden, dass hinsichtlich der wesentlichen Verfahrensparameter, insbesondere der Ansatzgrösse (also Menge und Art von partikulärem Feststoff und Flüssigkeit, d.h.beim Maischen die Menge und Art des Malzes und Menge und Art des Wassers) und der Art des Temperaturprogramms (also beim Maischen die Art und Dauer der eingehaltenen Temperaturrasten) gleich ist wie das besagte entsprechende vorbekannte Verfahren, das nur Ultraschall verwendet.

In allen Fällen des erfindungsgemässen Maischverfahrens kann aufgrund der zusammenwirkenden Beschallung mit Ultraschall und Rotation des Mischbehälters ein übliches Entfernen von Sauerstoff, wie in der Einleitung beschrieben, entfallen.

In seiner allgemeinsten Form, ohne Heizung und ohne im Mischbehälter eingebautes Gitter, eignet er sich insbesondere für das Maischen im Dekoktions- oder Infusionsverfahren. Der Mischer würde hier typischerweise die Funktionen des Maischebottichs und der Maischepfanne übernehmen.

In seiner ersten bevorzugten Ausführungsform mit Heizung, aber ohne das im Mischbehälter eingebaute Gitter, eignet er sich das Maischen im Kesselmaischverfahren. Der Mischer würde hier typischerweise ebenfalls die Funktionen des Maischebottichs und der Maischepfanne übernehmen. Optional könnte er auch für die vorgängige Darre verwendet werden.

In seiner zweiten bevorzugten Ausführungsform mit im Mischbehälter eingebautem Gitter aber ohne Heizung eignet er sich für die Schritte des Maischens im Dekoktions- oder Infusionsverfahren und des Abläuterns. Der Mischer würde hier typischerweise die Funktionen des Maischebottichs, der Maischepfanne und, unter Umständen, des Läuterbottichs übernehmen. Aufgrund des eingebauten Siebes kann das verbleibende Malz mit Nachgüssen gewaschen und die Nachgüsse über das Gitter abfiltriert werden.

In seiner dritten, besonders bevorzugten Ausführungsform mit im Mischbehälter eingebautem Gitter und Heizung eignet er sich für die vorgängige Darre, das anschliessende Maischen im Kesselmaischverfahren und das anschliessende Abläutern. Der Mischer würde hier typischerweise ebenfalls die Funktionen des Maischebottichs, der Maischepfanne und, unter Umstanden, des Läuterbottichs übernehmen.

Im Folgenden wird ein exemplarisches Brauverfahren unter Verwendung eines Mischers gemäss der vorstehenden besonders bevorzugten Ausführungsform beschrieben, wobei der Mischer zusätzlich einen Druckausgleich resp. Füllstandanzeige mit Steigrohr (wie in der allgemeinen Beschreibung erläutert und wie in Fig. 3 gezeigt) umfasst. Der Mischer umfasst auch drei Schwingplatten, die im Mischbehälter angeordnet sind; die Kombination von innerhalb des Mischbehälters angeordneten Schwingplatten, ihrer Stromversorgung und der Übertragung des zur Rotation des Mischbehälters erforderlichen Drehmomentübertragung ist gemäss der ersten bevorzugten Ausführungsform des allgemeinen Teils der Beschreibung.

Etwa 3000 kg eines üblichen, gedarrten und auf geeignete Korngrösse geschroteten Gerstenmalzes und etwa 9000 Liter Wasser werden in den stillstehenden Mischbehälter über eine nach oben zeigende Öffnung, etwa die Öffnung 61, eingefüllt und diese Öffnung wird mit einem Verschluss 71, etwa einem Schraubdeckel, flüssigkeits- und/oder gasdicht verschlossen. Alle anderen Öffnungen, die der Mischbehälter 2 aufweisen könnte, sind bereits mit jeweiligen Verschlüssen oder Flügelventilen flüssigkeits- und/oder gasdicht verschlossen.

Der Mischbehälter mit der darin enthaltene Mischung aus Malz und Wasser wird mittels der Rollen 161,162 in eine Rotation um die Rotationsachse mit etwa 5 - 15 U/min versetzt.

Bei laufender Rotation des Mischbehälters wird die Mischung bei 40-45°C eingemaischt und unter Einhalten von einer Eiweissrast bei 50-55°C, einer Maltoserast bei 63-65°C und einer Verzuckerungsrast bei 73-74°C bis auf eine Endtemperatur von 76-78°C erhitzt, wobei eine Induktionsheizung 11, die den metallischen Aussenmantel des Mischbehälters 2 aufheizt, verwendet wird. Das Einhalten der Temperaturgradienten und der Rasten wird mittels der Temperatursensoren 161,162 überwacht.

Während des gesamten Maischens wird der Innenraum des Mischbehälters 2 mittels der drei Schwingplatten 31,32,33 mit Ultraschall mit einer Leistung stufenlos regulierbar von etwa 10 - 50 W pro Ultraschallquelle, insbesondere pro Schwingplatte, beschallt.

Das gesamte Maischen dauert etwa 2-8 Stunden je nach Füllung. Aufgrund des Druckausgleichs über die Perforation(en) 51, die inwändig hohle Achse 5 und das Steigrohr 18 beträgt der Überdruck im Mischbehälter nie mehr als etwa 0,1 bar.

In noch heissem Zustand wird der Mischbehälter 2 angehalten, so dass sein im Innenraum vorhandenes Gitter 12 nach unten zeigt. Die Öffnung 62, die von der Umgebung in den durch das Gitter 12 abgetrennten Teil 13 des Innenvolumens des Mischbehälters 2 führt, wird geöffnet, worauf die Maische durch das Gitter gesiebt und über die Öffnung 62 in einen Läuterbottich abgelassen wird. Der Volumenausgleich für das abfliessende Volumen Maische kann über das Steigrohr 18 erfolgen, das jetzt nicht nur seine gesamte darin enthaltene Flüssigkeit in den Mischbehälter 2 zurückfliessen lässt, sondern auch noch Umgebungsluft nachströmen lässt. Gewünschtenfalls wird zusätzlich eine der anderen Öffnungen, die in den nicht abgetrennten Teil des Innenvolumens des Mischbehälters 2 führt, etwa die nach oben zeigende Öffnung 61, geöffnet, um für einen zusätzlichen Druckausgleich zu sorgen.

Die Öffnung 62 und die allenfalls weitere Öffnung, die für den zusätzlichen Druckausgleich sorgt, werden wieder mit ihren zugehörigen Verschlüssen verschlossen.

Das im Mischbehälter verbliebene Malz wird unter erneutem Rotieren des Mischbehälters 2 und unter erneutem Beschallen mit Ultraschall mit ein bis zwei Nachgüssen, die entweder vorgängig aufgeheizt oder direkt im Mischbehälter 2 selber mittels der Heizung 11 aufgeheizt werden, gewaschen, wobei das Abtrennen der Nachgüsse mittels Filtration über das Gitter 12 wie bereits bei der Maische beschrieben erfolgt.

Die abfiltrierte Maische und die Nachgüsse werden in einer getrennten Würzepfanne mit Hopfen versetzt und auf etwa 15° Plato eingekocht.

Die so erhaltene Stammwürze wird abgekühlt, in einem fachüblichen Whirlpool von den Hopfenresten abgetrennt und unter Zusatz von Hefe fermentiert.

Das Vorhandensein der einen oder mehreren Ultraschallquellen erleichtert auch die Reinigung des Mischbehälters. Zur Reinigung wird vorteilhaft das verbleibende Mischgut, insbesondere ein davon verbleibender Anteil partikulärer Feststoff, aus einer der Öffnungen im Mischbehälter (wenn der Mischbehälter ein Gitter enthält wäre es eine Öffnung, die in den Rest des Innenvolumens des Mischbehälters mündet) entleert. Sofern der Mischbehälter eine abnehmbare Stirnseite umfasst (siehe oben), kann stattdessen auch diese Stirnseite abgenommen und der verbleibende Anteil partikulärer Feststoff durch Kippen des Mischbehälters entleert werden. Der Mischbehälter wird dann mit Reinigungsflüssigkeit, insbesondere reinem Wasser, befüllt und die Öffnung wieder verschlossen oder die Stirnseite . Unter Rotieren und Beschallen mit Ultraschall wird eine effiziente Reinigung des Innenvolumens des Mischbehälters erzielt, insbesondere auch der Löcher eines darin enthaltenen Lochgitters.

Beispiel 1: Maischversuche mit einem erfindungsgemässen Mischer unter Verwendung von Ultraschall und/oder Rotation des Mischbehälters

Es wurde in allen Versuchen ein Mischer mit Konstruktion gemäss Fig. 4 verwendet, der aber zusätzlich an der Aussenfläche 22 des Mischbehälter 2 einen kleinen verschliessbaren Hahn aufwies, der im Normalfall verschlossen war.

### a) Maischen mit Ultraschall und Rotation des Mischbehälters (erfindungsgemäss)

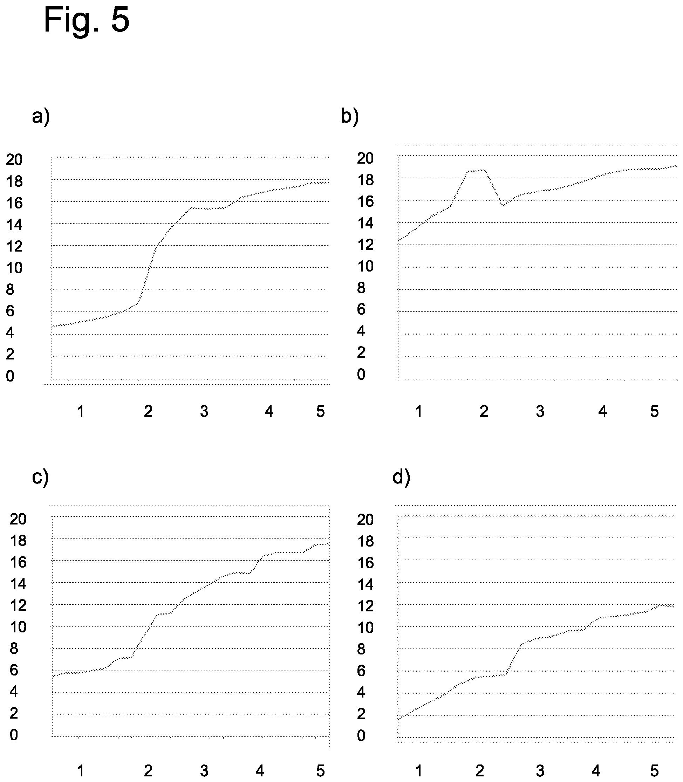

9,2 kg Malz (Mischung aus 3,8 kg Pils und 5,4 kg Weizen hell) und 33 Liter normales Stadtwasser (pH 6,5) wurden in den Mischbehälter 2 über die nach oben zeigenden Öffnungen 61 eingefüllt und diese Öffnungen flüssigkeits- und gasdicht verschlossen. Es wurde keine konventionelle Entgasung und kein Beaufschlagen mit einem Schutzgas wie etwa Stickstoff oder Kohlendioxid vorgenommen. Der Mischbehälter 2 mit der darin enthaltene Mischung aus Malz und Wasser wurde mittels der Rollen 161,162 in eine Rotation um die Rotationsachse mit 21 U/min versetzt. Bei laufender Rotation des Mischbehälters 2 wurde die Mischung zuerst bei 40-45°C eingemaischt, dann wurde unter Einhalten von einer Eiweissrast bei 50-53°C während 15 min, einer Maltoserast bei 64°C während 30 min, einer Verzuckerungsrast bei 73°C während 20 min und einer Läuterrast bei 76-77°C während 10 min gemaischt. Diese fünf Temperaturrasten sind in Fig.5 a) auf der X-Achse als die Ziffern 1, 2, 3, 4, resp. 5 angegeben. Während des gesamten Maischens wurde der Innenraum des Mischbehälters 2 mittels der Ultraschallquelle 35 mit den darin enthaltenen acht Ultraschallgeneratoren 23 mit Ultraschall von 27 kHz und einer Leistung von total 400 Watt beschallt.

Die Bestimmung der Würze erfolgte nach fachüblichem Verfahren alle 5 Minuten an Proben des Mischgutes. Hierzu wurde zur Probenentnahme während laufender Rotation des Mischbehälters 2, wenn der kleine Hahn unten war, der Hahn geöffnet und eine Probe des Mischgutes in einen Becher abgelassen und der Hahn danach wieder verschlossen. Auf der Y-Achse von Fig.5 a) ist die so gemessene Zunahme der Würze im Verlauf des Maischens in Grad Plato angegeben.

### b) Maischen mit Ultraschall und Rotation des Mischbehälters (erfindungsgemäss)

Der Versuch gemäss obigem a) wurde wiederholt, ausser dass die Frequenz des Ultraschalls 80 kHz betrug. Die fünf eingehaltenen Temperaturrasten sind in Fig.5 b) wiederum auf der X-Achse als die Ziffern 1, 2, 3, 4, resp. 5 angegeben; auf der Y-Achse von Fig.5 b) ist die gemessene Zunahme der Würze im Verlauf des Maischens in Grad Plato angegeben.

### c) Maischen ohne Ultraschall, aber mit Rotation des Mischbehälters (Vergleich)

Der Versuch gemäss obigem a) wurde wiederholt, ausser dass keine Beschallung mit Ultraschall erfolgte. Die fünf Temperaturrasten sind in Fig.5 c) wiederum auf der X-Achse als die Ziffern 1, 2, 3, 4, resp. 5 angegeben; auf der Y-Achse von Fig.5 c) ist die gemessene Zunahme der Würze im Verlauf des Maischens in Grad Plato angegeben.

### d) Maischen mit Ultraschall, aber ohne Rotation des Mischbehälters (Vergleich)

Der Versuch gemäss obigem b) wurde wiederholt, ausser dass keine Rotation des Mischbehälters eingesetzt wurde. Die fünf Temperaturrasten sind in Fig.5 d) wiederum auf der X-Achse als die Ziffern 1, 2, 3, 4, resp. 5 angegeben; auf der Y-Achse von Fig.5 d) ist die gemessene Zunahme der Würze im Verlauf des Maischens in Grad Plato angegeben.

Die Versuche a)-d) zeigen, dass die Kombination von Ultraschall und Rotation des Mischbehälters gegenüber der Verwendung von Ultraschall alleine oder der Verwendung der Rotation des Mischbehälters alleine synergistisch insbesondere zu Beginn im Anstieg der Grad Plato wirkt. Insbesondere zeigt der Vergleich zwischen a) und d), dass Ultraschall von 27kHz in Kombination mit Rotation des Mischbehälters bei 21 U/min wirksamer ist als Ultraschall mit 80kHz ohne Rotation des Mischbehälters.

## Patentansprüche

1. Mischer (1) umfassend einen Mischbehälter (2) mit einem Innenvolumen, der zur Rotation um eine Rotationsachse (4) befähigt ist, wobei der Mischer (1) auch mindestens eine Ultraschallquelle (31,32,33,34,35) umfasst, die zur Beschallung mindestens eines Teils dieses Innenvolumens mit Ultraschall befähigt ist, **dadurch gekennzeichnet, dass** die mindestens eine Ultraschallquelle mindestens eine Schwingplatte (31,32,33,34) ist, die im Inneren des Mischbehälters (2) angeordnet ist, oder mindestens ein Kastenprofil oder ein Vierkantrohr (35) ist, das in seinem Inneren mehrere Ultraschallquellen (23) umfasst; dass der Mischbehälter (2) mittels einer gegenüber dem Mischbehälter (2) frei drehbaren und starren Achse (5), die entlang der Rotationsachse (4) verläuft, zur Rotation befähigt ist und der Mischbehälter (2) zwei Lager (81,82) aufweist, mittels derer er gegenüber der starren Achse (5) frei drehbar ist, und die Achse (5) entweder durch den gesamten Mischbehälter (2) hindurch verläuft oder als zwei Achsabschnitte (191,192) vorliegt, die entlang der Rotationsachse (4) des Mischbehälters (2), aber nicht entlang seiner gesamten Länge, verlaufen, und je in eines der beiden Lager (81,82) des Mischbehälters (2) hineinragen; und dass die Drehmomentübertragung direkt auf die Aussenfläche des Mischbehälters (2) erfolgt.

2. Mischer (1) nach Anspruch 1, der eine oder mehrere flüssigkeits- und/oder gasdicht verschliessbare Öffnungen (61,62) zur Aufnahme eines zu mischenden Mischgutes in dem Mischbehälter (2) und/oder zur Entnahme von Mischgut aus dem Mischbehälter (2) aufweist.

3. Mischer (1) nach Anspruch 1 oder 2, **dadurch gekennzeichnet, dass** die Rotationsachse (4) um nicht mehr als 20°, bevorzugt um nicht mehr als 10°, eher bevorzugt um nicht mehr als 5° von der Horizontalen abweicht und am meisten bevorzugt horizontal ist.

4. Mischer (1) nach irgend einem der vorangehenden Ansprüche, **dadurch gekennzeichnet, dass** der Mischbehälter (2) rotationssymmetrisch um eine Symmetrieachse (4) ist.

5. Mischer (1) nach Anspruch 4, **dadurch gekennzeichnet, dass** er eine zylindrische Mantelfläche und zwei Stirnseiten (91,92) aufweist, und:
a) die Symmetrieachse (4) mit der Rotationsachse (4) zusammenfällt; oder
b) die Symmetrieachse gegenüber der Rotationsachse (4) geneigt ist; oder
c) die Symmetrieachse parallel zur Rotationsachse (4) verläuft, aber gegenüber der Rotationsachse (4) versetzt ist.

6. Mischer (1) nach Anspruch 5, **dadurch gekennzeichnet, dass** mindestens eine der beiden Stirnseiten (91,92) von dem Mischbehälter (2) abnehmbar ist.

7. Mischer (1) nach irgendeinem der vorangehenden Ansprüche, **dadurch gekennzeichnet, dass** er eine äussere oder innere Heizung (11) zum Beheizen des Mischbehälters (2) oder eine äussere oder innere Kühlung umfasst.

8. Mischer (1) nach irgendeinem der vorangehenden Ansprüche, umfassend im Innenvolumen des Mischbehälters (2) ein Gitter (12), das einen an der Innenfläche (21) des Mischbehälters (2) angrenzenden Teil (13) des Innenvolumens des Mischbehälters (2) vom Rest des Innenvolumens des Mischbehälters (2) abgrenzt, und wobei der Mischbehälter (2) mindestens zwei flüssigkeitsdicht verschliessbare Öffnungen (61,62) aufweist, wovon mindestens eine erste Öffnung (61) in den Rest des Innenvolumens mündet und zur Aufnahme eines zu mischenden Mischgutes in den Rest des Innenvolumens und/oder zur Entnahme von Mischgut aus Rest des Innenvolumens befähigt ist, und mindestens eine zweite Öffnung (62) in den abgegrenzten Teil (13) des Innenvolumens mündet und zur Entnahme von Flüssigkeit aus diesem abgegrenzten Teil (13) des Innenvolumens befähigt ist.

9. Mischer nach Anspruch 8, wobei das Gitter ein Lochgitter ist, dessen Löcher einen Lochdurchmesser im Bereich von 0,1 bis 1,3 mm aufweist und vorzugweise einen Lochdurchmesser von etwa 1,25 mm, etwa 1 mm, etwa 0,5 mm oder etwa 0,25 mm aufweisen.

10. Mischer (1) nach irgend einem der vorangehenden Ansprüche, **dadurch gekennzeichnet, dass**:
i) die eine starre, inwändige Achse (5) hohl ist, eine oder mehrere Perforierungen (51) aufweist, die eine flüssigkeitsleitende Verbindung zwischen dem Innenvolumen des Mischbehälters (2) und dem inwändigen Hohlraum der hohlen Achse (5) herstellt(herstellen), und die hohle Achse (5) mit einem nach oben offenen Steigrohr (18) flüssigkeitsleitend verbunden ist; oder
ii) von den zwei starren Achsabschnitten (191,192) ein erster Achsabschnitt (191) inwändig hohl ist und eine oder mehrere Perforierungen (51) aufweist, die eine flüssigkeitsleitende Verbindung zwischen dem Innenvolumen des Mischbehälters (2) und dem inwändigen Hohlraum des hohlen Achsabschnitts (191) herstellt(herstellen), und der inwändig hohle erste Achsabschnitt (191) mit einem nach oben offenen Steigrohr (18) flüssigkeitsleitend verbunden ist;
dergestalt dass, wenn der Mischbehälter (2) mit einem Mischgut befüllt ist, das eine Flüssigkeit umfasst, die Flüssigkeit den inwändigen Hohlraum der inwändig hohlen Achse (5) bzw. den inwändigen Hohlraum des inwändig hohlen ersten Achsabschnitts (191) und das Steigrohr (18) bis zu einer Höhe füllt, die einen hydrostatischen Druck erzeugt, der gleich dem Innendruck im Mischbehälter (2) ist; und eine Zunahme des Innendrucks im Mischbehälter (2) durch Verdrängen von weiterer Flüssigkeit aus dem Mischbehälter (2) über die Perforation(en) (51) in die inwändig hohle Achse (5) bzw. in den inwändig hohlen ersten Achsabschnitt (191) und in das Steigrohr (18) kompensierbar ist, und eine Abnahme des Innendrucks im Mischbehälter (2) durch Rückfluss von Flüssigkeit aus dem Steigrohr (18) über die inwändig hohle Achse (5) bzw. über den inwändig hohlen ersten Achsabschnitt (191) und die Perforation(en) (51) in den Mischbehälter (2) kompensierbar ist.

11. Mischer (1) nach irgend einem der vorangehenden Ansprüche, **dadurch gekennzeichnet, dass** der Mischbehälter (2) mit einem Mischgut befüllt ist, das Gerstenmalz und Wasser umfasst, und wobei dieses Mischgut vorzugsweise für das Maischen bei der Bierbrauerei geeignet ist.

12. Verwendung eines Mischers (1) nach irgend einem der vorangehenden Ansprüche in der Bierbrauerei oder in der Extraktion von Pflanzen oder Pflanzenteilen.

13. Verwendung nach Anspruch 12, **dadurch gekennzeichnet, dass** der Mischer ein Mischer nach einem der Ansprüche 1 bis 6 ohne Heizung und ohne ein im Mischbehälter eingesetztes Gitter ist, und dass er für das Maischen im Dekoktions- oder Infusionsverfahren verwendet wird.

14. Verwendung nach Anspruch 12, **dadurch gekennzeichnet, dass** der Mischer ein Mischer nach Anspruch 1 ohne ein im Mischbehälter eingesetztes Gitter ist, und dass er für das Maischen im Kesselmaischverfahren verwendet wird.

15. Verwendung nach Anspruch 12, **dadurch gekennzeichnet, dass** der Mischer ein Mischer nach Anspruch 7 mit zusätzlich im Mischbehälter eingesetztem Gitter (12) oder ein Mischer nach Anspruch 8 mit zusätzlicher Heizung (11) ist, und dass er für das Maischen im Kesselmaischverfahren und das Abläutern verwendet wird.

## Claims

1. Mixer (1) comprising a mixing container (2) with an interior volume and which is capable of rotating about a rotation axis (4), wherein the mixer (1) also comprises at least one ultrasound source (31,32,33,34,35) which is capable of sonicating at least part of this interior volume with ultrasound, **characterized in that** the at least one ultrasound source is at least one vibrating plate (31,32,33,34) arranged in the interior of the mixing container (2), or is at least one box profile or square tube (35) including in its interior several ultrasound sources (23); **in that** the mixing container (2) is capable of rotating by means of a rigid axle (5) which is freely rotatable relative to the mixing container (2) and which runs along the axis of rotation (4), and the mixing container comprising two bearings (81,82) by means of which it is freely rotatable relative to the rigid axle (5), and the axle (5) either runs through the entire mixing container (2) or is in the form of two axle sections (191,192) which run along the axis of rotation (4) of the mixing container (2) but not along its entire length, and the two axle sections (191,192) each protrude into one of the two bearings (81,82) of the mixing container (2), and **in that** the torque is transmitted directly onto the outer surface of the mixing container (2).

2. The mixer (1) according to claim 1, which has one or more liquid and/or gas-tight sealable openings (61,62) for receiving a mix to be mixed in the mixing container (2) and/or for removing mix from the mixing container (2).

3. The mixer (1) according to claim 1 or 2, **characterized in that** the axis of rotation (4) deviates from the horizontal by not more than 20°, preferably by not more than 10°, more preferably by not more than 5°, and most preferably is horizontal.

4. The mixer (1) according to any one of the preceding claims, **characterized in that** the mixing container (2) is rotationally symmetrical about an axis of symmetry (4).

5. The mixer (1) according to claim 4, **characterized in that** it has a cylindrical lateral surface and two end faces (91,92), and:
a) the axis of symmetry (4) coincides with the axis of rotation (4); or
b) the axis of symmetry is inclined relative to the axis of rotation (4); or
c) the axis of symmetry runs parallel to the axis of rotation (4) but is offset relative to the axis of rotation (4).

6. The mixer (1) according to claim 5, **characterized in that** at least one of the two end faces (91,92) is removable from the mixing container (2).

7. The mixer (1) according to any one of the preceding claims, **characterized in that** it comprises an external or internal heater (11) for heating the mixing container (2) or an external or internal cooling.

8. The mixer (1) according to any one of the preceding claims, comprising in the internal volume of the mixing container (2) a grid (12) which separates a part (13) of the internal volume of the mixing container (2) adjacent to the inner surface (21) of the mixing container (2) from the remainder of the internal volume of the mixing container (2), and wherein the mixing container (2) has at least two liquid-tight sealable openings (61,62), of which at least a first opening (61) opens into the remainder of the internal volume and is capable of receiving into the remainder of the interior volume a mix to be mixed and/or is capable of removing mix from the remainder of the interior volume, and at least one second opening (62) opens into the separated part (13) of the interior volume and is capable of removing liquid from this separated part (13) of the interior volume.

9. The mixer according to claim 8, wherein the grid is a perforated grid, the holes of which have a hole diameter in the range of 0.1 to 1.3 mm and preferably have a hole diameter of about 1.25 mm, about 1 mm, about 0.5 mm or about 0.25 mm.

10. The mixer (1) according to any one of the preceding claims, **characterized in that**:
i) the one rigid, internal axis (5) is hollow, has one or more perforations (51) which establish(es) a liquid-conducting connection between the interior volume of the mixing container (2) and the internal cavity of the hollow axle (5), and the hollow axle (5) is connected in a liquid-conducting manner to an upwardly open riser pipe (18); or
ii) of the two rigid axle sections (191,192) a first axle section (191) is hollow in the inside and has one or a plurality of perforations (51) which establish(es) a liquid-conducting connection between the interior volume of the mixing container (2) and the internal cavity of the hollow axle section (191), and the internally hollow first axle section (191) is connected in a liquid-conducting manner with a riser pipe (18) which is open at the top;
in such a way that, when the mixing container (2) is filled with a mix comprising a liquid, the liquid fills the internal cavity of the internally hollow axle (5) or the internal cavity of the internally hollow first axle section (191), respectively, and the riser pipe (18 ) up to a height that creates a hydrostatic pressure equal to the internal pressure in the mixing container (2); and an increase in the internal pressure in the mixing container (2) is compensable by displacing further liquid from the mixing container (2) via the perforation(s) (51) into the internally hollow axis (5) or into the internally hollow first axis section (191), respectively, and into the riser pipe (18), and a decrease in the internal pressure in the mixing container (2) is compensable by backflow of liquid from the riser pipe (18) via the internally hollow axis (5) or via the internally hollow first axis section (191), respectively, and the perforation(s) (51) into the mixing container (2).

11. The mixer (1) according to any one of the preceding claims, **characterized in that** the mixing container (2) is filled with a mix comprising barley malt and water, and this mix is preferably suitable for mashing in beer brewing.

12. A use of a mixer (1) according to any of the preceding claims in beer brewing or in the extraction of plants or plant parts.

13. The use according to claim 12, **characterized in that** the mixer is a mixer according to one of claims 1 to 6 without heating and without a grid inserted into the mixing container, and **in that** it is used for mashing in the decoction or infusion process.

14. The use according to claim 12, **characterized in that** the mixer is a mixer according to claim 1 without a grid inserted into the mixing container and **in that** it is used for mashing in the kettle mashing process.

15. The use according to claim 12, **characterized in that** the mixer is a mixer according to claim 7 with an additional grid (12) inserted in the mixing container or is a mixer according to claim 8 with additional heating (11), and **in that** it is used for mashing in the kettle mashing process and for lautering.

## Revendications

1. Mélangeur (1) comprenant un récipient de mélange (2) avec un volume intérieur, capable de rotation autour d'un axe de rotation (4), le mélangeur (1) comprenant également au moins une source ultrasonore (31,32,33,34,35), capable de sonication d'au moins une partie de ce volume intérieur avec de l'ultrasonique, **caractérisé en ce que** l'au moins une source ultrasonore est au moins une plaque vibrante (31,32,33,34), disposée à l'intérieur du récipient de mélange (2), ou est au moins un profilé en boîte ou un tube carré (35) contenant à l'intérieur plusieurs sources ultrasonores (23), **en ce que** le récipient de mélange (2) est capable de rotation par moyen d'un axe rigide (5) librement tournant par rapport au récipient de mélange (2), s'étendant le long de l'axe de rotation (4), et que le récipient de mélange (2) comporte deux roulements (81,82) par moyen desquels il est librement tournant par rapport à l'axe rigide (5), et l'axe (5) traversant soit l'ensemble du récipient de mélange (2) ou se présentant comme deux sections d'axe (191,192) s'étendant le long de l'axe de rotation (4) du récipient de mélange (2), mais pas sur toute sa longueur, et pénétrant chacune dans l'un des deux roulements (81,82) du récipient de mélange (2) ; et **en ce que** la transmission du couple se fait directement sur la surface extérieure du récipient de mélange (2).

2. Mélangeur (1) selon la revendication 1, qui comprend une ou plusieurs ouvertures étanches aux liquides et/ou aux gaz (61,62) pour l'introduction d'un produit à mélanger dans le récipient de mélange (2) et/ou pour le prélèvement de mélange du récipient de mélange (2).

3. Mélangeur (1) selon la revendication 1 ou 2, **caractérisé en ce que** l'axe de rotation (4) dévie de pas plus de 20°, préférablement pas plus de 10°, encore mieux pas plus de 5° par rapport à l'horizontale, et de préférence est horizontal.

4. Mélangeur (1) selon l'une quelconque des revendications précédentes, **caractérisé en ce que** le récipient de mélange (2) est rotativement symétrique autour d'un axe de symétrie (4).

5. Mélangeur (1) selon la revendication 4, **caractérisé en ce qu'**il comporte une surface cylindrique et deux faces frontales (91,92), et **en ce que**:
a) l'axe de symétrie (4) coïncide avec l'axe de rotation (4) ; ou
b) l'axe de symétrie est incliné par rapport à l'axe de rotation (4) ; ou
c) l'axe de symétrie est parallèle à l'axe de rotation (4) mais décalé par rapport à celui-ci.

6. Mélangeur (1) selon la revendication 5, **caractérisé en ce qu'**au moins l'une des deux faces frontales (91,92) est amovible du récipient de mélange (2).

7. Mélangeur (1) selon l'une quelconque des revendications précédentes, **caractérisé en ce qu'**il comprend un chauffage externe ou interne (11) pour chauffer le récipient de mélange (2) ou un refroidissement externe ou interne.

8. Mélangeur (1) selon l'une quelconque des revendications précédentes, comprenant dans le volume intérieur du récipient de mélange (2) une grille (12), séparant une partie (13) du volume intérieur du récipient de mélange (2), adjacente à la surface intérieure (21), du reste du volume intérieur du récipient de mélange (2), le récipient de mélange (2) comportant au moins deux ouvertures étanches aux liquides (61,62), dont au moins une première ouverture (61) mène au reste du volume intérieur et est capable d'introduire un produit à mélanger dans le reste du volume intérieur et/ou de retirer du mélange du reste du volume intérieur; et au moins une deuxième ouverture (62) mène à la partie séparée (13) du volume intérieur et est capable de prélever du liquide de cette partie séparée (13) du volume intérieur.

9. Mélangeur selon la revendication 8, la grille étant une grille perforée avec un diamètre de trou de 0,1 à 1,3 mm, de préférence environ 1,25 mm, 1 mm, 0,5 mm ou 0,25 mm.

10. Mélangeur (1) selon l'une quelconque des revendications précédentes, **caractérisé en ce que** :
i) l'un axe rigide interne (5) est creux, comporte une ou plusieurs perforations (51) établissant une connexion de liquide entre le volume intérieur du récipient de mélange (2) et l'espace creux intérieur de l'axe creux (5), l'axe creux (5) étant relié d'une manière apte à conduire du liquide à un tuyau montant (18) ouvert vers le haut; ou
ii) parmi les deux sections d'axe rigides (191,192), une première section d'axe (191) est creuse à l'intérieur et comporte une ou plusieurs perforations (51) établissant une connexion liquide entre le volume intérieur du récipient de mélange (2) et l'espace creux intérieur de la section d'axe creuse (191), la première section d'axe creuse à l'intérieur (191) étant reliée d'une manière apte à conduire du liquide à un tuyau montant (18) ouvert vers le haut;
de telle manière que, si le récipient de mélange (2) est chargé d'un produit à mélanger comprenant un liquide, le liquide remplit l'espace creux intérieur de l'axe creux (5), ou voir l'espace creux intérieur de la première section d'axe (191), et le tuyau (18), jusqu'à une hauteur générant une pression hydrostatique égale à la pression intérieure du récipient de mélange (2); et une augmentation de la pressure intérieure dans le récipient de mélange (2) puisse être compensée par déplacement de plus de liquide du récipient de mélange (2) à travers la ou les performation(s) (51) dans l'axe creux (5), ou voir dans la première section d'axe creuse à l'intérieur (191), et dans le tuyau montant (18); et une diminution de la pressure intérieure dans le récipient de mélange (2) puisse être compensée par refluxion de liquide du tuyau montant (18) à travers l'axe creux (5), ou voir la première section d'axe creuse (191), et à travers la ou les performation(s) (51) dans le récipient de mélange (2).

11. Mélangeur (1) selon l'une quelconque des revendications précédentes, **caractérisé en ce que** le récipient de mélange (2) est rempli d'un produit à mélanger comprenant malte d'orge et eau, et ce produit à mélanger est de préférence apte pour le brassage de la bière.

12. Utilisation d'un mélangeur (1) selon l'une quelconque des revendications précédentes pour le brassage de bière ou l'extraction de plantes ou parties de plantes.

13. Utilisation selon la revendication 12, **caracterisée en ce que** le mélangeur est un mélangeur selon l'une des revendications 1 à 6 sans chauffage ni grille introduite dans le récipient de mélange, et **en ce qu'**il est utilisé pour le brassage par décoction ou infusion.

14. Utilisation selon la revendication 12, **caracterisé en ce que** le mélangeur est un mélangeur selon la revendication 1 sans grille introduite dans le récipient de mélange, et **en ce qu'**il est utilisé pour le brassage par maische en cuve.

15. Utilisation selon la revendication 12, **caracterisé en ce que** le mélangeur ést un mélangeur selon la revendication 7 avec en outre une grille (12) intoduite dans le récipient de mélange, ou est un mélangeur selon la revendication 8 avec chauffage (11) supplémentaire, et **en ce qu'**il est utilisé pour le brassage par maische en cuve et pour l'égouttage.
